(19) **Europäisches Patentamt**
**European Patent Office**
**Office européen des brevets**

(11) **EP 2 898 951 A1**

(12) **EUROPEAN PATENT APPLICATION**
published in accordance with Art. 153(4) EPC

(43) Date of publication:
**29.07.2015 Bulletin 2015/31**

(51) Int Cl.:
*B01J 35/02* (2006.01)   *B01J 23/648* (2006.01)
*B01J 37/08* (2006.01)   *C01B 3/04* (2006.01)
*C01B 13/02* (2006.01)

(21) Application number: **13839793.0**

(22) Date of filing: **20.09.2013**

(86) International application number:
**PCT/JP2013/076450**

(87) International publication number:
**WO 2014/046305 (27.03.2014 Gazette 2014/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.09.2012 JP 2012208163**
**21.06.2013 JP 2013131153**

(71) Applicant: **Toto Ltd.**
**Fukuoka 802-8601 (JP)**

(72) Inventors:
• **TOKUDOME, Hiromasa**
**Kitakyushu-shi**
**Fukuoka 802-8601 (JP)**
• **OKUNAKA, Sayuri**
**Kitakyushu-shi**
**Fukuoka 802-8601 (JP)**

(74) Representative: **Grünecker Patent- und Rechtsanwälte**
**PartG mbB**
**Leopoldstraße 4**
**80802 München (DE)**

(54) **COMPOSITE PHOTOCATALYST, AND PHOTOCATALYST MATERIAL**

(57) Disclosed is a composite photocatalyst comprising photocatalyst particles for hydrogen generation and photocatalyst particles for oxygen generation that possess a high activity level of splitting water under visible light irradiation. Also disclosed is a photocatalytic member comprising a composite photocatalyst-containing photocatalytic layer fixed on a substrate. The composite photocatalyst comprises visible light responsive photocatalyst particles for hydrogen generation having a primary particle diameter of not more than 100 nm and visible light responsive photocatalyst particles for oxygen generation, the visible light responsive photocatalyst particles for hydrogen generation being in contact with the visible light responsive photocatalyst particles for oxygen generation.

FIG. 1

**Description**

FIELD OF INVENTION

The present invention relates to a composite photocatalyst comprising photocatalyst particles for hydrogen generation and photocatalyst particles for oxygen generation, wherein the photocatalyst particles for hydrogen generation and the photocatalyst particles for oxygen generation can split water using visible light. The present invention also relates to a photocatalytic member comprising a photocatalytic layer fixed on a substrate, wherein the photocatalytic layer comprise photocatalyst particles for hydrogen generation and photocatalyst particles for oxygen generation, and wherein the photocatalyst particles for hydrogen generation and the photocatalyst particles for oxygen generation can split water using visible light.

BACKGROUND ART

Visible light responsive photocatalysts can utilize visible light contained in large amount in sunlight. The visible light responsive photocatalysts are expected to be applied to photodecomposition of organic substances and hydrogen production by splitting water. In particular, photocatalysts for splitting water to produce hydrogen have drawn attention in terms of the renewable energy, and demand for highly active photocatalysts for splitting water has increased.

Rhodium-doped strontium titanate (Rh-SrTiO$_3$), a visible light responsive photocatalyst for splitting water, is known to have a very high capability of generating hydrogen by splitting water. A Z-scheme system, in which photocatalyst particles for oxygen generation are combined with Rh-SrTiO$_3$ particles, is known to generate hydrogen and oxygen with a high energy conversion efficiency of not less than 0.1% in a reaction of completely splitting water by irradiating with visible light a water suspension including both types of particles that are aggregated to each other therein by pH adjustment (Sasaki et al., J. Phys. Chem. C 17536-17542, 2009 (NPTL 1)).

The above Rh-SrTiO$_3$ has hitherto been prepared by a solid-phase reaction method or a hydrothermal synthesis method. It is known that these methods include firing a material at about 1000°C for high crystallization. Rh-SrTiO$_3$ particles thus obtained are known to have a primary particle diameter of approximately several hundred nanometers to a few micrometers and have a high hydrogen generation capability under visible light irradiation. Rh-SrTiO$_3$ particles having an increased specific surface area, that is, microcrystalline Rh-SrTiO$_3$ particles, are needed so that the Rh-SrTiO$_3$ particles have enhanced activity. Further, there is a demand for an improvement in conversion efficiency of a complete water-splitting reaction using a composite photocatalyst obtained by combining Rh-SrTiO$_3$ particles having a high hydrogen generation capability with photocatalyst particles for oxygen generation.

JP 2012-187520A (PTL 2) discloses a photocatalyst-fixed product for splitting water, the photocatalyst-fixed product including a photocatalytic layer provided on a substrate, the photocatalytic layer including a visible light responsive photosemiconductor that is a nitride or oxynitride containing Ga, Zn, Ti, La, Ta and Ba atoms, a co-catalyst supported on the photosemiconductor, and one or more hydrophilic inorganic material selected from the group consisting of silica, alumina, and titanium oxide. According to this literature, since the visible light responsive photocatalyst and the hydrophilic inorganic material are co-present in the photocatalytic layer, water can be penetrated into not only the surface and its inner proximity of the photocatalytic layer but also the interior of the photocatalytic layer when the water-splitting reaction occurs while the hydrophilic surface allows the generated gas to become less likely to adhere to the photocatalytic layer, whereby the diffusion of the generated gas into the gas phase is promoted.

[Citation List]

[Patent Literature]

[PTL 1] JP 2012-056947A
[PTL 2] JP 2012-187520A

[Non Patent Literature]

[NPTL 1] Sasaki et al., J. Phys. Chem. C 17536-17542, 2009

## SUMMARY OF THE INVENTION

### Problems to be solved by the invention

The present inventors have now been able to produce visible light responsive photocatalyst particles that have high crystallinity as well as refinement of primary particles diameters, and have now found that a composite photocatalyst having a high hydrogen-generation capability, preferably a visible light responsive composite photocatalyst for splitting water, can be obtained by combining such visible light responsive fine photocatalyst particles for hydrogen generation with visible light responsive photocatalyst particles for oxygen generation. Further, the present inventors have found that such fine photocatalyst particles for hydrogen generation and photocatalyst particles for oxygen generation are fixed on a substrate to obtain a photocatalytic member having a high hydrogen-generation capability. The present invention has been made based on such findings.

Accordingly, an object of the present invention is to provide a composite photocatalyst that comprises visible light responsive photocatalyst particles for hydrogen generation and visible light responsive photocatalyst particles for oxygen generation, wherein the visible light responsive photocatalyst particles for hydrogen generation have high crystallinity as well as refined primary particle diameters, and wherein the visible light responsive photocatalyst particles for hydrogen generation are in contact with the visible light responsive photocatalyst particles for oxygen generation, allowing the composite photocatalyst to have a high hydrogen-generation capability. Another object of the present invention is to provide a photocatalytic member that comprises visible light responsive photocatalyst particles for hydrogen generation and visible light responsive photocatalyst particles for oxygen generation, wherein visible light responsive photocatalyst particles for hydrogen generation have high crystallinity as well as refined primary diameters, and wherein the visible light responsive photocatalyst particles for hydrogen generation and the visible light responsive photocatalyst particles for oxygen generation are fixed on a substrate, allowing the photocatalytic member to have a high hydrogen-generation capability.

### Means for solving the problems

According to an aspect of the present invention, there is provided a composite photocatalyst comprising visible light responsive photocatalyst particles for hydrogen generation having a primary particle diameter of not more than 100 nm and visible light responsive photocatalyst particles for oxygen generation, wherein the visible light responsive photocatalyst particles for hydrogen generation are in contact with the visible light responsive photocatalyst particles for oxygen generation. According to another aspect of the present invention, there is provided a photocatalytic member comprising: a substrate; and a photocatalytic layer fixed on the substrate, wherein the photocatalytic layer comprises visible light responsive photocatalyst particles for hydrogen generation having a primary particle diameter of not more than 100 nm and visible light responsive photocatalyst particles for oxygen generation, and wherein the visible light responsive photocatalyst particles for hydrogen generation are in contact with the visible light responsive photocatalyst particles for oxygen generation .

### EFFECT OF THE INVENTION

The composite photocatalyst and the photocatalytic member according to the present invention which have a high photocatalytic activity under visible light irradiation can split water with a high efficiency.

### BRIEF DESCRIPTION OF THE DRAWINGS

[Fig. 1] Fig. 1 is a typical view of a cross-section of a visible light responsive photocatalytic member for splitting water according to the present invention.
[Fig. 2] Fig. 2 is an image of rhodium-doped strontium titanate particles contained in a visible light responsive composite photocatalyst for splitting water according to the present invention obtained by scanning electron microscopic observation.
[Fig. 3] Fig. 3 is an image of a photocatalytic member comprising a visible light responsive composite photocatalyst for splitting water according to the present invention fixed on an anodized alumina filter.

## EMBODIMENTS OF THE INVENTION

### Definition

The term visible light as used herein means electromagnetic waves (light) having a wavelength that is visible with the human eye. Preferably, the visible light means light containing a visible light having a wavelength of not less than 380 nm, more preferably light containing a visible light having a wavelength of not less than 420 nm. Light containing visible light includes sunlight, collected sunlight with an energy density enhanced by collection of light, and artificial light sources from such as xenon lamps, halogen lamps, sodium lamps, fluorescent lamps, and light emitting diodes. Preferably, sunlight that inexhaustibly shines down on the earth can be used as a light source. When the sunlight is used, a visible light that occupies not less than 60% of the sunlight can be utilized, contributing to an enhancement in energy conversion efficiency in converting water into hydrogen and oxygen.

### Composite photocatalyst

The composite photocatalyst according to the present invention comprises photocatalyst particles that have a primary particle diameter of not more than 100 nm and that can generate hydrogen through splitting water by irradiation of visible light and photocatalyst particles that can generate oxygen through splitting water by irradiation of visible light, wherein the visible light responsive photocatalyst particles for hydrogen generation are in contact with the visible light responsive photocatalyst particles for oxygen generation According to the composite photocatalyst of the present invention, preferably a visible light responsive composite photocatalyst for splitting water (hereinafter simply referred to as composite photocatalyst), visible light responsive fine photocatalyst particles for hydrogen generation having a primary particle diameter of not more than 100 nm (hereinafter simply referred to as photocatalyst particles for hydrogen generation) are used and, thus, the efficiency of photodecomposition for hydrogen generation, which determines the rate of the complete water splitting can be enhanced. Further, the composite photocatalyst according to the present invention includes the photocatalyst particles for hydrogen generation having a high capability of generating hydrogen and the visible light responsive photocatalyst particles for oxygen generation (hereinafter simply referred to as photocatalyst particles for oxygen generation), wherein the photocatalyst particles for hydrogen generation are used in contact with the photocatalyst particles for oxygen generation. The capability of each of these two types of photocatalysts can be effectively exerted. As a result, complete water splitting can be achieved with a high efficiency.

The composite photocatalyst according to the present invention exhibits properties of semiconductors having an optical bandgap and absorbs visible light. Thus, electron transition such as interband transition leads to the production of excited electrons in a conduction band (or electron acceptor level present within the bandgap), and excited holes in a valence band (or electron donor level present within the bandgap), whereby reaction objects are reduced and oxidized.

In the composite photocatalyst according to the present invention, the photocatalyst particles for hydrogen generation are in contact with the photocatalyst particles for oxygen generation. The contact allows a hydrogen generation reaction and an oxygen generation reaction to be carried out in the photocatalyst particles for hydrogen generation and the photocatalyst particles for oxygen generation, independently. Further, in the composite photocatalyst according to the present invention, reaction sites can be separated, and, thus, disadvantageous phenomena, in which water is reproduced by a reverse reaction of the generated hydrogen and oxygen, resulting in a lowered reaction rate of splitting water, can be prevented.

In the composite photocatalyst according to the present invention, the mixing ratio of the photocatalyst particles for hydrogen generation to the photocatalyst particles for oxygen generation that are contained in the composite photocatalyst is preferably photocatalyst particles for hydrogen generation : photocatalyst particles for oxygen generation = 10 : 90 to 90 : 10, more preferably 20 : 80 to 80 : 20, in terms of weight ratio. When the ratio is in the above-defined range, a charge recombination reaction in a contact interface of the composite photocatalyst particles can be promoted. Consequently, the efficiency of splitting water can be enhanced.

### Water-splitting reaction by composite photocatalyst

In the composite photocatalyst according to the present invention, since the photocatalyst particles for hydrogen generation are in contact with the photocatalyst particles for oxygen generation, charged carriers (electrons and holes) can transfer between the two types of particles. The present inventors have found the water-splitting reaction will occur as follows. However, the present invention is not limited to this mechanism.

When the composite photocatalyst according to the present invention is irradiated with visible light, a photoexcitation reaction occurs in the photocatalyst particles for hydrogen generation and the photocatalyst particles for oxygen generation independently, wherein the two types of particles are contained in the composite photocatalyst , and excited electrons and excited holes are produced within the two types of particles. The excited holes produced within the photocatalyst particles for hydrogen generation are diffused to the surface of the photocatalyst particles for hydrogen generation and the excited electrons produced within the photocatalyst particles for oxygen generation are diffused to the surface of the photocatalyst particles for oxygen generation. Consequently, these charged carriers disappear as a result of a charge recombination reaction in a particle interface. Here the charge recombination reaction is a reaction of the excited electrons with the excited holes such that the excited carriers disappear.

The excited electrons that remain in the photocatalyst particles for hydrogen generation are diffused to the surface of the photocatalyst particles for hydrogen generation to reduce water on the surface of the photocatalyst particles for hydrogen generation or the surface of a co-catalyst supported on the surface of the photocatalyst particles for hydrogen generation, thereby to generate hydrogen, and the excited holes that remain in the photocatalyst particles for oxygen generation are diffused to the surface of the photocatalyst particles for oxygen generation to oxidize water on the surface of the photocatalyst particles for oxygen generation or the surface of a co-catalyst supported on the surface of the photocatalyst particles for oxygen generation, thereby to generate oxygen.

Contact state between particles in composite photocatalyst

In the composite photocatalyst according to the present invention, the photocatalyst particles for hydrogen generation are in contact with the photocatalyst particles for oxygen generation. These particles may be in contact with each other in any state as long as the charge recombination reaction between the excited holes of the photocatalyst particles for hydrogen generation and the excited electrons of the photocatalyst particles for oxygen generation occurs. For the contact state between the particles, the particles may be physically contacted or chemically bound. The contact state in which the particles are physically contacted and chemically bound at the same time may be allowed.

Process for producing composite photocatalyst

The process for producing the composite photocatalyst according to the present invention may be any method without limitation as long as the method includes a step that allows the charge recombination reaction between the excited hole of the photocatalyst particles for hydrogen generation and the excited electrons of the photocatalyst particles for oxygen generation to occur in the particle interface. In order to allow the charge recombination reaction to occur, the composite photocatalyst according to the present invention includes the photocatalyst particles for hydrogen generation that are in contact with the photocatalyst particles for oxygen generation.

Physical methods or chemical methods may be used in order to form the state in which the photocatalyst particles for hydrogen generation are in contact with the photocatalyst particles for oxygen generation. Preferred physical methods include methods in which a powder composed of the photocatalyst particles for hydrogen generation and a powder composed of the photocatalyst particles for oxygen generation or a slurry obtained by dispersing the both types of powders in a liquid are subjected to kneading such as mechanical kneading and manual kneading or mechanical milling such as ball milling, bead milling, and planetary milling to allow the photocatalyst particles for hydrogen generation and the photocatalyst particles for oxygen generation to collide with each other.

After the photocatalyst particles for hydrogen generation and the photocatalyst particles for oxygen generation are subjected to dispersion and mixing, the dispersed mixture may be dried to obtain a composite photocatalyst comprising these particles that are firmly in contact with each other.

In order to further improve the contact state, firing is preferably carried out in such a state that the photocatalyst particles for hydrogen generation and the photocatalyst particles for oxygen generation are in contact with each other. Thus, the contact area in an interface of the particles can be increased. The firing is preferably carried out at 200°C or more to 700°C or less, more preferably 300°C or more to 600°C or less. Firing in these temperature ranges allows the production of impurities, which would occur as a result of a reaction between the photocatalyst particles for hydrogen generation and the photocatalyst particles for oxygen generation at more elevated temperatures than above, to be inhibited while improving the contact state.

A preferred chemical method includes imparting a specific functional group to the surface of any one of or both the photocatalyst particles for hydrogen generation and the photocatalyst particles for oxygen generation, wherein the photocatalyst particles for hydrogen generation contact and react with the photocatalyst particles for oxygen generation, thereby obtaining a chemically bound state, for example, by an ionic bond, a covalent bond, or a hydrogen bond.

In order to further improve the contact state, as with the physical methods, firing is preferably carried out in such a state that the photocatalyst particles for hydrogen generation are in contact with the photocatalyst particles for oxygen generation. The firing may be carried out at the same temperature as described above. Thus, functional group-containing organic substances can be thermally decomposed while improving the contact state. Consequently, the contact state in the particle interface can be improved, and the production of impurities, which would occur as a result of a reaction between the photocatalyst particles for hydrogen generation and the photocatalyst particles for oxygen generation at more elevated temperatures than above, can be inhibited while improving the contact state.

In a preferred embodiment of the present invention, a functional group can be imparted to the surfaces of the photocatalyst particles for hydrogen generation and the photocatalyst particles for oxygen generation independently. The functional group is preferably imparted by a method that includes adsorbing a high molecular compound such as a polymer containing the functional group or a low molecular compound to the surfaces of the photocatalyst particles for hydrogen generation and the photocatalyst particles for oxygen generation indepedently. Thus, the dispersibility of both types of the particles in a liquid medium can be improved. Further, primary particles of the photocatalyst particles for hydrogen generation can be in contact with primary particles of the photocatalyst particles for oxygen generation. Consequently, the contact interface of these particles can be increased, and the charge recombination reaction can be rapidly promoted, contributing to an enhanced efficiency of the water-splitting reaction.

Any polymer can be used as long as the polymer can be adsorbed on the surface of the photocatalyst particles and can be removed from the composite photocatalyst by, for example, firing. Examples of such polymers include nonionic polymers and ionic polymers.

Examples of the nonionic polymers include aqueous solvents such as polyvinyl alcohol, polyethylene glycol, polypropylene glycol, polyvinyl pyrrolidone, carboxymethylcellulose, carboxypropylcellulose, triblock copolymers (for example, polyethylene oxide-polypropylene oxide-polyethylene oxide) and organic solvents such as ethylcellulose and polyvinyl butyral.

Examples of the ionic polymers include anionic polymers such as carboxylic acid-added polymers such as polyacrylic acids (including ammonium salts, sodium salts, and potassium salts), and cationic polymers such as amine-based compound-added polymers such as polyethyleneimine, polyallyamine, and polydiallylmethyl ammonium.

In a preferred embodiment of the present invention, the process for producing the composite photocatalyst according to the present invention includes the step of dispersing the photocatalyst particles for hydrogen generation and the photocatalyst particles for oxygen generation independently in solutions containing polymers having different charges (anionic polymers and cationic polymers), then forming primary particles of the photocatalyst particles for hydrogen generation and the photocatalyst particles for oxygen generation to prepare slurries, wherein both types of the particles are nearly monodispersed. Thereafter, these slurries are mixed together to allow the photocatalyst particles for hydrogen generation to be spontaneously in contact with the photocatalyst particles for oxygen generation through coulombic interaction between polymers with different charges, wherein the polymers are adsorbed on the surfaces of both types of the particles. For example, the photocatalyst particles for hydrogen generation are dispersed in a solution containing an anionic polymer to prepare a slurry, the photocatalyst particles for oxygen generation are dispersed in an aqueous solution containing a cationic polymer to prepare a slurry, and these slurries are then mixed together to allow both types of the primary particles to be in contact with each other in a highly dense state. Thereafter, firing is carried out in such a state that the primary particles are in a highly densely contact state, thereby removing the polymer to produce a composite photocatalyst having a high activity. The firing temperature is as described above.

Photocatalyst particles for hydrogen generation

The photocatalyst particles for hydrogen generation contained in the composite photocatalyst according to the present invention have a primary particle diameter of not more than 100 nm. Further, the photocatalyst particles for hydrogen generation, which are capable of producing hydrogen by splitting water under visible light irradiation, are used in contact with the photocatalyst particles for oxygen generation.

The photocatalyst particles for hydrogen generation usable in the present invention are photocatalyst particles that exhibit properties of semiconductors having an optical bandgap and absorb visible light to produce, through electron transition such as interband transition, excited electrons in a conduction band (or electron acceptor level present within the bandgap) and excited holes in a valence band (or electron donor level present within the bandgap), whereby reaction objects can be reduced and oxidized. This means that the photocatalyst particles for hydrogen generation contained in the composite photocatalyst according to the present invention allow excited electrons produced under visible light irradiation to reduce water, thereby producing hydrogen. The conduction band (or electron acceptor level present within bandgap) of the photocatalyst particles for hydrogen generation may be located at a negative position relative to the reduction potential of water (0 V vs. NHE (standard hydrogen electrode potential)), and the valence band (or electron donor level present within bandgap) of the photocatalyst particles for hydrogen generation may be located at a positive position relative to the position of the conduction band of the photocatalyst particles for oxygen generation.

Examples of suitable photocatalyst particles for hydrogen generation include Rh-doped $SrTiO_3$ ($SrTi_{1-x}Rh_xO_3$: x = 0.002 to 0.1), Ir-doped $SrTiO_3$ ($SrTi_{1-x}Ir_xO_3$: x = 0.002 to 0.1), Cr-doped $SrTiO_3$ ($SrTi_{1-x}Cr_xO_3$: x = 0.002 to 0.1), Cr- and Ta-doped $SrTiO_3$ ($SrTi_{1-x-y}Cr_xTa_yO_3$: x = 0.002 to 0.1, y=0.002 to 0.1), $Cu_2O$, CuO, oxynitrides or nitrides containing transition metals or typical metals, for example, GaN-ZnO solid solution, $LaTiO_2N$, $BaTaO_2N$, $BaNbO_2N$, TaON, $Ta_3N_5$, and $Ge_3N_4$, and copper composite sulfides or acid sulfides containing typical metals such as Ga, In, and Al, for example, $CuGaS_2$, $CuInS_2$, $Cu(Ga,In)S_2$, $CuGaSe_2$, $CuInSe_2$, $Cu(Ga,In)Se_2$, $Cu_2ZnSnS_4$(CZTS), and $Cu_2ZnSn(S,Se)_4$.

Examples of more preferred photocatalyst particles for hydrogen generation include Rh-doped $SrTiO_3$

$(SrTi_{1-x}Rh_xO_3$: x = 0.005 to 0.05), Ir-doped $SrTiO_3$ ($SrTi_{1-x}Ir_xO3$: x = 0.005 to 0.05), Cr-doped $SrTiO_3$ ($SrTi_{1-x}Cr_xO_3$: x = 0.002 to 0.1), Cr- and Ta-doped $SrTiO_3$ ($SrTi_{1-x-y}Cr_xTa_yO_3$: x = 0.002 to 0.1, y=0.002 to 0.1), $Cu_2O$, $CuO$, GaN-ZnO solid solution, $LaTiO_2N$, $BaTaO_2N$, $BaNbO_2N$, $TaON$, $Ta_3N_5$, $Ge_3N_4$, $CuGaS_2$, $CuInS_2$, $Cu(Ga,In)S_2$, $CuGaSe_2$, $CuInSe_2$, $Cu(Ga,In)Se_2$, $Cu_2ZnSnS_4$(CZTS), and $Cu_2ZnSn(S,Se)_4$.

Examples of the most preferred photocatalyst particles for hydrogen generation include Rh-doped $SrTiO_3$($SrTi_{1-x}Rh_xO_3$: x = 0.01 to 0.04), Cr-doped $SrTiO_3$ ($SrTi_{1-x}Cr_xO_3$: x = 0.002 to 0.1), Cr- and Ta-doped $SrTiO_3$ ($SrTi_{1-x-y}Cr_xTa_yO_3$: x = 0.002 to 0.1, y=0.002 to 0.1).

Primary particle diameter of photocatalyst particles for hydrogen generation

The primary particle diameter of the photocatalyst particles for hydrogen generation contained in the composite photocatalyst according to the present invention is not more than 100 nm, preferably not more than 70 nm. The photocatalyst particles for hydrogen generation having such small diameters have an increased surface area per unit weight, wherein the particles are in contact with water. Thus, the number of reaction sites for reducing water is increased, and, consequently, hydrogen can be generated with a high efficiency.

The advantage of photocatalyst particles for hydrogen generation that have a small diameter contained in the composite photocatalyst according to the present invention is that the distance of diffusion of excited electrons and excited holes produced within the particles under visible light irradiation from the inside of the particles to the surface of the particles is short. Thus, a reaction for generating hydrogen by reducing water and a charge recombination reaction between excited holes produced by the photocatalyst particles for hydrogen generation and excited electrons produced by the photocatalyst particles for oxygen generation can high-efficiently occur at the surface of the particles with the exited electrons and the exited holes diffused thereto.

Regarding a method for measuring the primary particle diameter of the photocatalyst particles for hydrogen generation, the primary particle diameter can be defined, for example, by an average value of 50 crystal particles in observation, each of which is approximated by a circle, under a scanning electron microscope (manufactured by Hitachi, Ltd., "S-4100," hereinafter referred to also as "SEM") at a magnification of 40,000 times.

Crystallinity of photocatalyst particles for hydrogen generation

The photocatalyst particles for hydrogen generation contained in the composite photocatalyst according to the present invention have high crystallinity and a small primary particle diameter. Thus, a recombination reaction between excited holes and excited electrons within the photocatalyst particles for hydrogen generation, the reaction mainly start to occur at an oxygen defect level, can be prevented. As a result, reduction of water by excited electrons in the photocatalyst particles for hydrogen generation and a charge recombination reaction between the excited holes of the photocatalyst particles for hydrogen generation and the excited electrons of the photocatalyst particles for hydrogen generation at an interface of the two types of particles are promoted, contributing to an efficient water-splitting reaction.

Supporting of co-catalyst on photocatalyst particles for hydrogen generation

In a preferred embodiment of the present invention, when water is splitted using photocatalyst particles for hydrogen generation contained in the composite photocatalyst according to the present invention, a co-catalyst is supported on a surface of the photocatalyst particles for hydrogen generation. This co-catalyst allows swift hydrogen generation to occur.

At least one type of metal particles selected from the group consisting of platinum, ruthenium, iridium, and rhodium, or a mixture of these type of metal particles can be preferably used as a co-catalyst for hydrogen generation. Metal particles of platinum and ruthenium can be more preferably used. The co-catalyst that is supported in a particulate form on the surface of the photocatalyst particles for hydrogen generation allows activation energy in the reduction reaction of water to be reduced, contributing to swift hydrogen generation.

Preferred examples of methods for supporting a co-catalyst include impregnation methods and adsorption methods. In the impregnation methods and adsorption methods, photocatalyst particles are dispersed in a solution containing a co-catalyst precursor dissolved therein to adsorb the co-catalyst on the surface of the photocatalyst. Examples of co-catalyst precursors include chlorides, nitrates, and amine salts of metals such as platinum, ruthenium , iridium, rhodium and the like.

Preferably, after the co-catalyst precursor is supported on the surface of the photocatalyst particles, the co-catalyst precursor is reduced. When the co-catalyst precursor is reduced to a metal state, the activity is enhanced. Preferable reduction methods of the co-catalyst precursor include a photoreduction method and a chemical reduction method. The photoreduction method includes irradiating the photocatalyst particles with ultraviolet light or visible light to produce excited electrons within the photocatalyst particles, thereby allowing the co-catalyst precursor adsorbed on the photocatalyst to be reduced. The chemical reduction method includes reducing the co-catalyst precursor under a hydrogen gas stream of 400°C or below, preferably 300°C or below. The co-catalyst supported by the above methods is in a particulate form, and, the co-catalyst that is supported in a particulate form on the surface of the photocatalyst particles for hydrogen generation allows the activation energy in the reduction reaction of water to be reduced, contributing to swift hydrogen generation.

Rhodium-doped strontium titanate that is one of the most preferred examples of the photocatalyst particles for hydrogen generation contained in the composite photocatalyst according to the present invention will be described below.

Crystallinity of rhodium-doped strontium titanate particles

Rhodium-doped strontium titanate ($Rh$-$SrTiO_3$) particles as photocatalyst particles for hydrogen generation contained in the composite photocatalyst according to the present invention have high crystallinity and a small primary particle diameter.

The present inventors have found that particles that have a larger absorbance derived from $Rh^{4+}$ in crystals as well as a smaller absorbance derived from oxygen defects present in crystals as compared with conventional rhodium-doped strontium titanate particles, have a high crystallinity and a high photocatalytic activity. However, it is difficult for $Rh$-$SrTiO_3$ to have a high crystallinity as well as to be in a refined crystal form with a large specific surface area. Practically it is difficult to grow a crystal of $Rh$-$SrTiO_3$ with a high crystallinity while refinement of the crystal is maintained. An absorbance derived from $Rh^{4+}$ in crystals and an absorbance derived from oxygen defects present in crystals can be used as an index to determine $Rh$-$SrTiO_3$ particles, the crystals of which are microcrystals and have a high crystallinity.

The formation of oxygen defects is generally considered as one cause of a lowering in crystallinity of metal oxides. The larger the number of oxygen defect sites in metal oxides, that is, the larger the number of oxygen defects, the lower the degree of crystallization of metal oxides, that is, the lower the crystallinity, due to disturbance of periodicity of crystals.

The number of oxygen defects of the rhodium-doped strontium titanate particles contained in the composite photocatalyst according to the present invention can be determined using absorbance A (=1-spectral reflectance R) as an index. The absorbance A can be quantitatively determined by diffuse reflection spectrum measurement of powders of rhodium-doped strontium titanate particles in the ranges of ultraviolet light, visible light, and near-infrared light. Oxygen defects present in metal oxides, for example, titanium oxide, cause a donor level of $Ti^{3+}$. The donor level of $Ti^{3+}$ is caused in a range of an electron energy that is lower by approximately 0.75 to 1.18 eV from the lower end of a conduction band composed of Ti-3d orbital in a band structure of titanium oxide. Further, an absorption spectrum of titanium oxide having oxygen defects is known to have a absorption band in a range from a visible light to a near-infrared light (Cronemeyer et al., Phys. Rev. No. 113, p1222-1225, 1959). The present inventors have now confirmed as follows. Measurement of a diffuse reflection spectrum of rhodium-doped strontium titanate particles shows the rhodium-doped strontium titanate particles, as with titanium oxide, have a broad absorption band in a range of a visible light to a near-infrared light. Further, it has been found that, when a set temperature of the firing is raised, the absorbance is reduced in this near-infrared light range. Based on these facts, the present inventors have found that the degree of improvement in crystallinity provided by raising the firing temperature can be quantified by measuring absorption in a range from a visible light to a near-infrared light.

The present inventors also have found that the state of the rhodium is also important for rhodium-doped strontium titanate particles to have a high photocatalytic activity and the crystallinity increases with increasing absorption derived from tetravalent rhodium ($Rh^{4+}$) in strontium titanate crystals. The following mechanism will demonstrate the effect of valence of rhodium on crystallinity. However, the present invention is not limited to this mechanism.

In general, the valence of rhodium is known to be divalent, trivalent, tetravalent, and pentavalent. Among rhodium having these valences, trivalent rhodium ($Rh^{3+}$) is most stable in the atmosphere with room temperature. When a starting material containing trivalent rhodium is used, it is known that, when strontium titanate ($SrTiO_3$) is fired at high temperatures for crystallization, sites of tetravalent titanium ($Ti^{4+}$) are doped with rhodium. In this case, when crystal site of $Ti^{4+}$ + is substitutionally doped with $Rh^{3+}$, oxygen defects disadvantageously occur in order to keep charge neutrality. The present inventors have found that, in order to reduce the oxygen defects, crystal sites of $Ti^{4+}$ should be doped with $Rh^{4+}$ that can maintain the charge neutrality of crystals leading to improved crystallinity of the particles.

Accordingly, the present inventors have found that optical property parameters of rhodium-doped strontium titanate particles having a high photocatalytic activity according to the present invention can be clarified by measuring the particles in the following method.

Methods for the measurement of optical properties of rhodium-doped strontium titanate particles contained in the composite photocatalyst according to the present invention may use an ultraviolet-visible-near-infrared spectrophotometer (manufactured by Japan Spectroscopic Co., Ltd., "V-670") equipped with an integrating sphere unit. Specifically, an integrating sphere unit (manufactured by Japan Spectroscopic Co., Ltd., "ISV-722") is mounted on the ultraviolet-visible-near-infrared spectrophotometer. Alumina sintered pellets are used in baseline measurement. On that basis, a spectral reflectance R can be determined by measuring a diffuse reflection spectrum of a sample prepared by filling 30 mg of particle powder into a window portion (5 mmϕ) in a trace powder cell (manufactured by Japan Spectroscopic Co., Ltd., "PSH-003") at a filling fraction of not less than 50%. The optical properties of rhodium-doped strontium titanate particles are determined by measuring a diffuse reflection spectrum in a wavelength range of 200 to 2500 nm with the spectrophotometer The rhodium-doped strontium titanate particles contained in the composite photocatalyst according to the present invention are characterized in that absorbance $A_{570}$ at wavelength 570 nm (=1-$R_{570}$[spectral reflectance at wavelength 570 nm]), attributed to light absorption derived from $Rh^{4+}$ in strontium titanate crystals, is not less than 0.6, and absorbance $A_{1800}$ at wavelength 1800 nm (=1-$R_{1800}$[spectral reflectance at wavelength 1800 nm]), attributed to light absorption derived from oxygen defects in crystals is not more than 0.7, where the two absorbances are determined under conditions that absorbance $A_{315}$ at wavelength 315 nm (=1-$R_{315}$[spectral reflectance at wavelength 315 nm]) is in the range of 0.86 to 0.87. In a preferred embodiment, the absorbance $A_{570}$ at wavelength 570 nm is 0.6 (inclusive) to 0.8 (exclusive). In another preferred embodiment, the absorbance $A_{1800}$ at wavelength 1800 nm is 0.3 (inclusive) to 0.7 (inclusive).

Primary particle diameter of rhodium-doped strontium titanate particles

The rhodium-doped strontium titanate particles as photocatalyst particles for hydrogen generation contained in the composite photocatalyst according to the present invention has a very small primary particle diameter. The primary particle diameter is preferably not more than 70 nm. This small primary particle diameter allows the rhodium-doped strontium titanate particles to have a high specific surface area. Further, the area of contact with a substance to be decomposed increases, resulting in a high photocatalytic activity of the particles. Preferably, the primary particle diameter is not more than 50 nm. More preferably, the primary particle diameter is 30 nm (inclusive) to 70 nm (inclusive). Still more preferably, the primary particle diameter is 30 nm (inclusive) to 50 nm (inclusive). The primary particle diameter of the rhodium-doped strontium titanate particles may be measured by the above-described evaluation method.

Structure of rhodium-doped strontium titanate particles

The rhodium-doped strontium titanate particles as photocatalyst particles for hydrogen generation contained in the composite photocatalyst according to the present invention have a large specific surface area. In the present invention, use of an $R_{SP}$ value of the rhodium-doped strontium titanate particles as an index has identified that the rhodium-doped strontium titanate particles have a large surface area and that a secondary particle, that is, a powder, has a high porosity wherein the secondary particle is made of the rhodium-doped strontium titanate particles.

The $R_{SP}$ value is an index correlated with the amount of water molecules adsorbed on the surface of particles and thereby depends upon a surface area of particles in contact with water when the particles are dispersed in water. The rhodium-doped strontium titanate particles contained in the composite photocatalyst according to the present invention are utilized as a photocatalyst for splitting water when the particles are in contact with water. In this case, water permeates gaps among primary particles or pores within a secondary particle, and thus the surface of the particles is in contact with water. Accordingly, in the rhodium-doped strontium titanate particles contained in the present invention, use of the $R_{SP}$ value as an index to determine the surface area of particles on which water is adsorbed is useful in obtaining particles having a large specific surface area. A method for the measurement of the specific surface area of particles includes a BET analysis based on nitrogen adsorption and desorption measurement, as a main conventional method. In this BET analysis, however, nitrogen is used as a probe, and the molecular diameter of nitrogen is so small that nitrogen is disadvantageously adsorbed on the surface of pores that water cannot permeate. The method for the measurement of the specific surface area by a BET analysis is not effective when the object is particles with water adsorbed thereon.

The $R_{SP}$ value is represented by the following equation. Further, the $R_{SP}$ value can be measured with a pulse NMR particle boundary evaluation apparatus (for example, "Acorn area," manufactured by Nihon Rufuto Co., Ltd.).

$$R_{SP}=(R_b-R_{av})/R_b \quad (1)$$

wherein $R_{av}$ is a mean relaxation time constant. The relaxation time constant is an inverse number of a relaxation time of water in contact with or adsorbed on the surface of particles when the particles are dispersed in water. The mean relaxation time constant is a mean value of determined relaxation time constants.

$R_b$ is a relaxation time constant of blank water not containing particles.

The larger the $R_{sp}$ value, the larger the interaction of the surface of particles with water. This means that a large $R_{sp}$ indicates a large contact area between particles and water, and thus a large specific surface area of particles.

The $R_{SP}$ value of the rhodium-doped strontium titanate particles contained in the composite photocatalyst according to the present invention is preferably not less than 0.86, more preferably not less than 0.88. The $R_{SP}$ value is preferably not more than 10.

Composition of rhodium-doped strontium titanate

The composition of rhodium-doped strontium titanate as photocatalyst particles for hydrogen generation contained in the composite photocatalyst according to the present invention may be represented by $SrTi_{1-x}Rh_xO_3$. The molar ratio represented by M(rhodium)/M(titanium+rhodium) of the rhodium-doped strontium titanate particles is preferably 0.001 to 0.03, more preferably 0.01 to 0.03. The molar ratio in this range allows an increase in the amount of oxygen defects in crystals to be suppressed and thus a high photocatalytic activity is achieved.

As described above, the rhodium-doped strontium titanate particles contained in the composite photocatalyst according to the present invention, which have the absorbance as described above as well as the very fine primary particle shape, which is measured with SEM have a high photocatalytic activity.

Process for producing rhodium-doped strontium titanate particles

A wet reaction method may be utilized as a production process of the rhodium-doped strontium titanate particles as photocatalyst particles for hydrogen generation used in the composite photocatalyst according to the present invention. Wet reaction methods include sol-gel methods, polymerized complex methods, and hydrothermal reaction methods. For example, in the production of the rhodium-doped strontium titanate particles by the sol-gel method, alkoxides of titanium or chlorides of titanium are used as a starting material. A hydroxide containing titanium is produced by a hydrolytic reaction of the starting material with water. Rhodium-doped strontium titanate particles are obtained by firing the hydroxide at 600°C or above for crystallization.

Production of particles using aqueous solution containing precursor of rhodium-doped strontium titanate

For the production of the rhodium-doped strontium titanate particles as photocatalyst particles for hydrogen generation contained in the composite photocatalyst according to the present invention, a thermal decomposition method using an aqueous solution containing strontium ions, titanium ions and rhodium ions (an aqueous solution thermal decomposition method) can be preferably employed. The aqueous solution thermal decomposition method includes providing a metal-containing precursor as a starting material and heating an aqueous solution containing the metal-containing precursor to induce a dehydration polycondensation reaction between metal-containing precursors with the evaporation of water as the solvent. In the sol-gel method using metal compounds (for example, alkoxides of metals or chlorides of metals and the like) that tend to be rapidly hydrolyzed with water, metal hydroxides are produced by hydrolysis between metal-containing precursors, and the dehydration polycondensation rapidly occurs, probably leading to coarsening of crystal nuclei. On the other hand, in the thermal decomposition method using an aqueous solution, since metal-containing precursors that tend to be mildly hydrolyzed are used as the starting material, stable dissolution in water is ensured. Further, when the aqueous solution containing the metal-containing precursor is heated, water as the solvent is evaporated to mildly cause a dehydration polycondensation reaction between metal-containing precursors. Consequently, the generation speed of crystal nuclei during thermal decomposition is lowered, and, thus refinement of crystal nuclei is achieved.

In one embodiment of the production process of the rhodium-doped strontium titanate particles, preferably, an aqueous solution containing a rhodium-doped strontium titanate precursor is prepared by mixing a titanium compound, a strontium compound, a rhodium compound and a hydrophobic complexing agent together to prepare a mixture and dissolving the mixture in water. The aqueous solution thus obtained is hereinafter referred to as an aqueous solution A. The rhodium-doped strontium titanate precursor is a mixture of a compound having a six-membered ring structure formed by coordinating a hydrophobic complexing agent to titanium ions generated as a result of dissociation of the titanium compound, strontium ions generated as a result of dissociation of a strontium compound and rhodium ions generated as a result of dissociation of a rhodium compound. In the preparation of the aqueous solution A, a titanium compound and a hydrophobic complexing agent are mixed together to prepare an aqueous solution containing a water-soluble titanium complex (an aqueous solution thus obtained being referred to as aqueous solution B). A strontium compound and a rhodium compound are mixed into the aqueous solution B to prepare an aqueous solution containing a rhodium-doped strontium titanate precursor, that is, the solution A. The water-soluble titanium complex is one in which a hydrophobic complexing agent has been coordinated to titanium ions generated as a result of dissociation of the titanium compound.

In the production process of the rhodium-doped strontium titanate particles, preferably, in addition to the titanium compound, a hydrophobic complexing agent is added as the starting material from the viewpoint of rendering a $Ti^{4+}$-con-

taining titanium compound (that is originally sparingly soluble in water) soluble in water. Hydrolysis can be suppressed by coordinating the hydrophobic complexing agent to titanium ions for complexing of the titanium ions. Alkoxides of titanium and chlorides of titanium may be used as the titanium compound. Alkoxides of titanium include titanium tetramethoxide, titanium tetraethoxide, titanium tetra-n-propoxide, titanium tetraisopropoxide, and titanium tetra-n-butoxide and others. Chlorides of titanium include titanium tetrachloride, titanium tetrafluoride and titanium tetrabromide.

The hydrophobic complexing agent used in the production process of the rhodium-doped strontium titanate particles can be coordinated to titanium ions, allowing a hydrophobic portion to be exposed to a solvent phase side of the water-soluble titanium complex. Preferred hydrophobic complexing agents include diketone compounds and catechol compounds. Preferred diketone compounds are diketone compounds represented by general formula: $Z_1$-CO-CH$_2$-CO-$Z_2$ wherein $Z_1$ and $Z_2$ independently represent an alkyl or alkoxy group. Preferred diketone compounds represented by the above general formula include acetylacetone, ethyl acetoacetate, propyl acetoacetate, butyl acetoacetate and others. Preferred catechol compounds include ascorbic acid, pyrocatechol, tert-butylcatechol and others. Still more preferably, acetylacetone and ethyl acetoacetate that have a very high complexing capability of being coordinated to titanium are used. This can suppress intermolecular polymerization by intermolecular dehydration polycondensation that occurs when a hydroxyl group that is a hydrophilic portion is exposed to a solvent phase side. Therefore, in thermal decomposition, refinement of crystal nuclei and refinement of particles after a thermal decomposition reaction are achieved.

In a preferred embodiment of the production process of the rhodium-doped strontium titanate particles, in addition to the hydrophobic complexing agent, a hydrophilic complexing agent may be used. The hydrophilic complexing agent is preferably a carboxylic acid, more preferably a carboxylic acid represented by formula $R^1$-COOH wherein $R^1$ represents a $C_{1-4}$ alkyl group, or a hydroxy acid or dicarboxylic acid having 1 to 6 carbon atoms. Such hydrophilic complexing agents include water-soluble carboxylic acids such as acetic acid, lactic acid, citric acid, butyric acid, and malic acid. Still more preferred water-soluble carboxylic acids are acetic acid or lactic acid. This achieves the supresion of a hydrolytic reaction of the titanium compound or an improvement in solubility of the titanium compound in water.

The solvent for complex formation may be water. In another preferred embodiment, water-soluble organic solvents may be used as the solvent. Use of the water-soluble organic solvents can improve the solubility of the transition metal compound. Specific examples of water-soluble organic solvents include methanol, ethanol, n-propanol, isopropanol, cellosolve-based solvents and carbitol-based solvents.

In a preferred embodiment of the present invention, the water-soluble titanium complexes may be those described in JP 2012-056947A. Specifically, titanium complexes with the number of coordinations to titanium ions being 6 are usable. Such titanium complexes comprise: titanium ions; a first ligand that is represented by $Z_1$-CO-CH$_2$-CO-$Z_2$ wherein $Z_1$ and $Z_2$ independently represent an alkyl or alkoxy group and further functions as a bidentate ligand; a second ligand that is a carboxylate; third and fourth ligands that are independently selected from the group of alkoxides and hydroxide ions; and a fifth ligand that is H$_2$O, each of which is coordinated to the titanium ions.

Preferably the $Sr^{2+}$-containing strontium compound is soluble in water does not retain a residue of anion component upon heat crystallization. Preferred are, for example, strontium nitrate, strontium acetate, strontium chloride, strontium bromide, strontium lactate, strontium citrate and others.

The $Rh^{3+}$-containing rhodium compound is preferably soluble in water and, upon heat crystallization, does not retain a residue of anion component. The rhodium compounds include rhodium nitrate, rhodium nitrate, rhodium chloride, rhodium bromide, rhodium lactate, rhodium citrate. $Rh^{4+}$-containing molecules may be used as the rhodium compound. Hydrophilic complexing agents such as lactic acid, butyric acid, and citric acid and others may be used for the purpose of improving the solubility of the strontium compound or the rhodium compound in water.

In the production of the rhodium-doped strontium titanate particles as photocatalyst particles for hydrogen generation used in the composite photocatalyst according to the present invention, preferably, the mixing ratio of various starting materials in the aqueous solution A is 0.01 to 0.2 mole, more preferably 0.02 to 0.1 mole, per 100 g of water for the titanium compound containing one atom of titanium, is 1 to 1.1 times by mole larger than the titanium compound containing one atom of titanium for the strontium compound, is a desired doping amount for the rhodium compound, is 0.005 to 0.4 mole, more preferably 0.015 to 0.15 mole, for the hydrophobic complexing agent, and is 0.01 to 0.2 mole, more preferably 0.025 to 0.15 mole, for the hydrophilic complexing agent. When the starting materials are respectively mixed at the above mixing ratio, the titanium compound is well rendered soluble in water and a high degree of crystallization and refinement of particles after thermal decomposition are possible. The molar ratio of the hydrophobic complexing agent to the titanium compound is preferably 0.5 to 2 mole, more preferably 0.8 to 1.2, per mole of the titanium compound containing one atom of titanium. The molar ratio in the above-defined range allows the progress of a hydrolytic reaction of the titanium compound and the decrease in water solubility caused by hydrophobicity of molecules of the titanium compound to be suppressed. The molar ratio of the hydrophilic complexing agent to the titanium compound is preferably 0.2 to 2 moles, more preferably 0.3 to 1.5 moles, per mole of the titanium compound containing one atom of titanium. The molar ratio in the above-defined range allows to suppress the progress of a hydrolytic reaction of the titanium compound and improve the solubility of the titanium compound in water. In the aqueous solution A, the pH value that can maintain stability of individual ions in the aqueous solution and can realize the refinement of particles after crystallization is preferably 2 to 6, more preferably 3 to 5. The pH value in the above-defined range allows coarsening of crystals caused by the promotion of a hydrolytic polycondensation which promotion is developed under a strong acid or strong alkali atmosphere to be suppressed.

Further, in the production of the rhodium-doped strontium titanate particles as photocatalyst particles for hydrogen generation contained in the composite photocatalyst according to the present invention, preferably, water dispersible organic polymer particles are added to the aqueous solution A (a liquid obtained by adding water dispersible organic polymer particles to the aqueous solution A being hereinafter referred to as dispersion). A powder of rhodium-doped strontium titanate particles can be obtained by heating the dispersion for crystallization. The addition of water-dispersible organic polymer particles to the aqueous solution A can reduce the degree of aggregation of the rhodium-doped strontium titanate particles to increase the porosity or the void ratio of a powder of the rhodium-doped strontium titanate particles.

Spherical latex particles or an oil-in-water (O/W) emulsion can be used as the water-dispersible organic polymer particles. Rhodium-doped strontium titanate fine particles are obtained by adding the water-dispersible organic polymer particles. A secondary particle, an aggregation of the such particles, is porous. A mechanism through which such fine primary particles are obtained and, consequently, the porosity of secondary particles obtained by the aggregation thereof becomes high will be as follow. However, the scope of the present invention is not limited to this mechanism. The addition of the water-dispersible organic polymer particles allows the water-soluble titanium complex, strontium ions and rhodium ions, which are polar molecules, to be adsorbed to the surface of the polymer particles that are polar in water. In a process of heat crystallization, the titanium complex present on the surface of the polymer particles is hydrolyzed to produce crystal nuclei of rhodium-doped strontium titanate. Since the crystal nuclei on the surface of the polymer particles are present with a physical distance therebetween, there is little opportunity of bonding among the crystal nuclei and, consequently, the growth of crystals proceeds slowly, leading to a small primary particle diameter of the rhodium-doped strontium titanate particles. Further, it is considered that, although the formed rhodium-doped strontium titanate particles are bound to one another as a result of the disappearance of polymer particles by thermal decomposition, the presence of the polymer particles suppresses the aggregation of the rhodium-doped strontium titanate particles, resulting in an increase in void ratio of secondary particles as an aggregate, that is, an increase in porosity.

The dispersed diameter of the water-dispersible organic polymer particles is preferably 10 to 1000 nm, more preferably 30 to 300 nm. The dispersed particles diameter in the above-defined range allows the physical distance among the crystal nuclei of rhodium-doped strontium titanate to be increased. Thus, after the heat crystallization, the rhodium-doped strontium titanate particles can be refined. Further, the water-dispersible organic polymer particles are preferably formed of a material that, after heat crystallization at 600°C or above, does not retain a residue of amorphous carbon or the like, which is a residue of the organic polymer particles. Suitable materials include polymerization products of monomer units of styrene, acryl, urethane, epoxy or the like, or polymerization products of a plurality of the monomer units. The addition amount of the water-dispersible organic polymer particles is preferably 1 to 20 times, more preferably 3 to 15 times larger than that of the weight of rhodium-doped strontium after crystallization at high temperatures. The addition of the amount of the polymer particles in the above-defined range to the aqueous solution A allows the aggregation of the particles after the crystallization to be suppressed and thus the primary particle diameter of the particles is reduced.

In the production process of the rhodium-doped strontium titanate particles, the following method is preferably used as a method for the preparation of the rhodium-doped strontium titanate particles from the dispersion. At the outset, a dried powder is obtained by drying the dispersion at a low temperature of 200°C or below. Rhodium-doped strontium titanate particles can be produced by firing the dried powder for crystallization. The step of drying the dispersion can be followed by the step of firing the dried powder without interval. The firing temperature for the crystallization of rhodium-doped strontium titanate is 800°C (exclusive) to 1100°C (exclusive), more preferably 900°C (inclusive) to 1050°C (inclusive). The firing temperature in the above-defined range allows highly pure rhodium-doped strontium titanate particles to be highly crystallized while the water-dispersible organic polymer particles are thermally decomposed.

Photocatalyst particles for oxygen generation

The photocatalyst particles for oxygen generation contained in the composite photocatalyst according to the present invention can split water under visible light irradiation to produce oxygen and are in contact with the photocatalyst particles for hydrogen generation.

The photocatalyst particles for oxygen generation usable in the present invention are made of photocatalyst materials that exhibit properties of semiconductors having an optical bandgap and absorb visible light to produce, through electron transition such as interband transition, excited electrons in a conduction band and excited holes in a valence band, whereby reaction objects can be reduced and oxidized. In another word, the photocatalyst particles for oxygen generation contained in the composite photocatalyst according to the present invention allows excited holes produced under visible light irradiation to oxidize water, thereby producing oxygen. The valence band of the photocatalyst particles for oxygen generation may be located at a positive position relative to the oxidation potential of water (+1.23 V vs. NHE (standard hydrogen electrode potential)), and the conduction band of the photocatalyst particles for oxygen generation may be located at a negative position relative to the position of the valence band of the photocatalyst particles for hydrogen generation.

Examples of suitable photocatalyst particles for oxygen generation include $BiVO_4$, $WO_3$, $Bi_2WO_6$, $Fe_2O_3$, $Bi_2MoO_6$, oxynitrides or nitrides containing transition metals or typical metals, for example, GaN-ZnO solid solution, $LaTiO_2N$, $BaTaO_2N$, $BaNbO_2N$, TaON, $Ta_3N_5$, and $Ge_3N_4$, and copper composite sulfides or acid sulfides containing typical metals such as Ga, In, and Al, for example, $CuGaS_2$, $CuInS_2$, $Cu(Ga,In)S_2$, $CuGaSe_2$, $CuInSe_2$, $Cu(Ga,In)Se_2$, $Cu_2ZnSnS_4$(CZTS), and $Cu_2ZnSn(S,Se)_4$.

Examples of more preferred photocatalyst particles for oxygen generation include $BiVO_4$, $WO_3$, $Bi_2WO_6$, $Bi_2MoO_6$, $Fe_2O_3$, GaN-ZnO solid solution, $LaTiO_2N$, $BaTaO_2N$, $BaNbO_2N$, TaON, $Ta_3N_5$, $Ge_3N_4$, $CuGaS_2$, $CuInS_2$, $Cu(Ga,In)S_2$, $CuGaSe_2$, $CuInSe_2$, $Cu(Ga,In)Se_2$, $Cu_2ZnSnS_4$(CZTS), and $Cu_2ZnSn(S,Se)_4$. Specific examples of the most preferred photocatalyst particles for oxygen generation include $BiVO_4$, $WO_3$, $Bi_2WO_6$, and $Fe_2O_3$.

Primary particle diameter of photocatalyst particles for oxygen generation

The primary particle diameter of the photocatalyst particles for oxygen generation contained in the composite photocatalyst according to the present invention is preferably not more than 500 nm, more preferably not more than 200 nm, still more preferably not more than 100 nm, most preferably not more than 70 nm. The photocatalyst particles for oxygen generation having such small diameters have an increased surface area per unit weight, wherein the surface of the particles is in contact with water. Thus, the number of reaction sites for oxidizing water is increased, and, consequently, oxygen can be generated with a high efficiency.

The advantage of photocatalyst particles for oxygen generation that have a small diameter contained in the composite photocatalyst according to the present invention is that the distance of diffusion of excited holes and excited electrons produced within the particles under visible light irradiation from the inside of the particles to the surface of the particles is short. Thus, a reaction for generating oxygen by oxidizing water and a charge recombination reaction between and excited holes produced by the photocatalyst particles for hydrogen generation can high-efficiently occur at the surface of the particles with the excited holes and the excited electrons diffused thereto.

The method for measuring the primary particle diameter of the photocatalyst particles for oxygen generation is the same as that of the primary particle diameter of the photocatalyst particles for hydrogen generation, which is previously described.

Crystallinity of photocatalyst particles for oxygen generation

The photocatalyst particles for oxygen generation contained in the composite photocatalyst according to the present invention have high crystallinity and a small primary particle diameter. Thus, a recombination reaction between excited holes and excited electrons within the photocatalyst particles for oxygen generation, the reaction mainly start to occur at an oxygen defect level, can be prevented. As a result, oxidation of water by excited holes in the photocatalyst particles for oxygen generation and a charge recombination reaction between the excited electrons of the photocatalyst particles for oxygen generation and the excited holes of the photocatalyst particles for hydrogen generation at an interface of the two types of the particles are promoted, contributing to an efficient water-splitting reaction.

Process for producing photocatalyst particles for oxygen generation

Process for producing the photocatalyst particles for oxygen generation contained in the composite photocatalyst according to the present invention include various wet reaction methods such as sol-gel methods, polymerized complex methods, and hydrothermal reaction methods. For example, the sol-gel method, which is one of wet reaction methods includes subjecting metal alkoxides or metal chlorides as starting materials to a hydrolysis reaction with water to produce metal hydroxides, and firing the product at 600°C or above for crystallization.

A preferable example of the production process of the photocatalyst particles for oxygen generation contained in the composite photocatalyst according to the present invention includes the aqueous solution thermal decomposition method described above. Further, in another preferred embodiment, the following method may be utilized. For example, when $BiVO_4$ is used as the photocatalyst particles for oxygen generation, fine $BiVO_4$ that is highly crystalline and has a primary particle diameter of not more than 100 nm can be synthesized by mixing a water-soluble complex obtained by complexing $Bi^{3+}$ with ethylenediamine tetraacetate (EDTA) with a water-soluble complex that contains 1 to 2 carboxylic acids per molecule and that is obtained by complexing $V^{5+}$ with tartaric acid or lactic acid, in an aqueous solution. Then, the mixture is dried, and fired at a firing temperature of 400°C or above.

Photocatalytic member

The photocatalytic member according to the present invention comprises a substrate and a photocatalytic layer fixed on the substrate, wherein the photocatalytic layer comprises photocatalyst particles for hydrogen generation having a primary particle diameter of not more than 100 nm and photocatalyst particles for oxygen generation, and wherein the visible light responsive photocatalyst particles for hydrogen generation are in contact with the visible light responsive photocatalyst particles for oxygen generation. The photocatalytic layer contained in the photocatalytic member according to the present invention includes photocatalyst particles for hydrogen generation having a microstructure of a small primary particle diameter and photocatalyst particles for oxygen generation, the photocatalytic layer being present as an aggregate formed of these fine particles. Accordingly, the photocatalytic layer has a high porosity, and the specific surface area of the photocatalytic layer is increased. As a result, the photocatalytic layer formed by the aggregation of the photocatalyst particles for hydrogen generation and the photocatalyst particles for oxygen generation that originally maintain a high photocatalytic activity.

The photocatalytic layer of the photocatalytic member according to the present invention includes an aggregate of photocatalyst particles for hydrogen generation and photocatalyst particles for oxygen generation that have a microstructure of a small primary particle diameter, and, thus, the contact area between the particles and the substrate is large. Thus, the photocatalytic member in which the substrate and the photocatalytic layer firmly adhere to each other can be obtained.

The photocatalytic layer of the photocatalytic member according to the present invention incledes an aggregate of photocatalyst fine particles, and, thus, this fine particles allows the binding property among the particles to be good. Consequently, a photocatalytic layer can be formed of the particles that are evenly disposed. Further, the binding property among the particles allows the photocatalytic layer to be thick .

The photocatalytic layer may include a layer or a film over the entire substrate, or a layer or a film on part of the substrate. The photocatalytic layer may also include partial island formation on the surface of the substrate. Further, the photocatalytic layer may be in pattens of form such as wave, comb, fiber, or mesh. In the present invention, the photocatalytic layer means an aggregate of photocatalyst particles present in the above forms on the substrate.

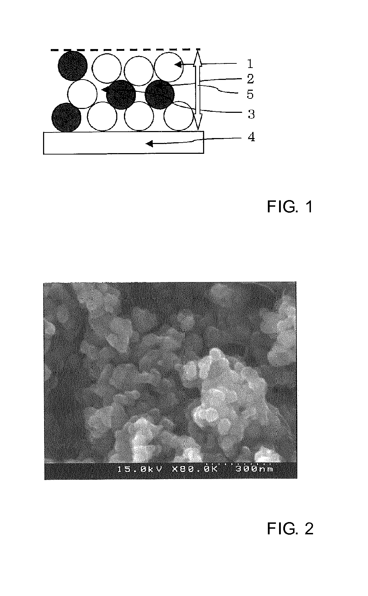

The thickness of the photocatalytic layer of the photocatalytic member according to the present invention is preferably 0.1 $\mu$m or more to 100 $\mu$m or less. The thickness of the photocatalytic layer is more preferably 0.2 $\mu$m or more to 30 $\mu$m ore less. The thickness of the photocatalytic layer is determined by scanning electron microscopic observation of a cross section of the photocatalytic member. Specifically, the thickness of the photocatalytic layer is defined as a length from a point on the substrate to an uppermost portion of the photocatalytic layer in a direction perpendicular to the horizontal tangent at the point. For example, when the substrate is a flat plate as shown in Fig. 1 which will be illustrated later, the thickness of the photocatalytic layer is a length from the surface of the substrate to an uppermost portion of the photocatalytic layer in a vertical direction. When the surface of the substrate is formed of fibers or the like, the thickness of the photocatalytic layer is a length from a point on the surface of the fibers to an uppermost portion of the photocatalytic layer in a direction perpendicular to the horizontal tangent at the point.

In a preferred embodiment of the present invention, the photocatalytic layer of the photocatalytic member according to the present invention includes an aggregate formed of a plurality of composite photocatalyst particles comprising visible light responsive photocatalyst particles for hydrogen generation having a small primary particle diameter of not more than 100 nm and visible light responsive photocatalyst particles for oxygen generation, wherein the visible light responsive photocatalyst particles for hydrogen generation having a small primary particle diameter of not more than 100 nm are in contact with the visible light responsive photocatalyst particles for oxygen generation. In a more preferred embodiment of the present invention, the photocatalytic layer of the photocatalytic member according to the present invention includes an aggregate formed of a plurality of composite photocatalyst particles comprising photocatalyst particles for hydrogen generation having a small primary particle diameter (not more than 100 nm, preferably not more than 70 nm) and photocatalyst particles for oxygen generation having a small primary particle diameter (preferably not more than 500 nm, more preferably not more than 200nm, still more preferably not more than 100 nm, most preferably not more than 70 nm), wherein the visible light responsive photocatalyst particles for hydrogen generation having a small primary particle diameter are in contact with the visible light responsive photocatalyst particles for oxygen generation having a small primary particle diameter.

In another preferred embodiment of the present invention, the photocatalytic layer of the photocatalytic member according to the present invention includes such that visible light responsive photocatalyst particles for hydrogen generation having a primary particle diameter of not more than 100 nm are in contact with visible light responsive photocatalyst particles for oxygen generation by mixture. In a more preferred embodiment of the present invention, the photocatalytic layer of the photocatalytic member according to the present invention includes such that photocatalyst particles for hydrogen generation having a small primary particle diameter (not more than 100 nm, preferably not more than 70 nm) are mixed to be in contact with photocatalyst particles for oxygen generation having a small primary particle diameter (preferably not more than 500 nm, more preferably not more than 200 nm, still more preferably not more than 100 nm, most preferably not more than 70 nm).

Fig. 1 is a typical cross-sectional view of a photocatalytic member according to the present invention. In Fig. 1, the photocatalytic member comprises a substrate 4 and a photocatalytic layer fixed on the substrate 4, wherein the photocatalytic layer includes an aggregate of photocatalyst fine particles for hydrogen generation 1 and photocatalyst particles for oxygen generation 2, and has voids among the particles 3 and a thickness 5.

In still another preferred embodiment of the present invention, the photocatalytic layer of the photocatalytic member according to the present invention comprises a layer of visible light responsive photocatalyst particles for hydrogen generation having a primary particle diameter of not more than 100 nm and a layer of visible light responsive photocatalyst particles for oxygen generation, wherein the two types of layers are alternately stacked, and wherein the visible light responsive photocatalyst particles for hydrogen generation are in contact with the visible light responsive photocatalyst particles for oxygen generation. In a more preferred embodiment of the present invention, the photocatalytic layer of the photocatalytic member according to the present invention comprises a layer of photocatalyst particles for hydrogen generation having a primary particle diameter (not more than 100 nm, preferably not more than 70 nm) and a layer of photocatalyst particles for oxygen generation having a small primary particle diameter (preferably not more than 500 nm, more preferably 200 nm, still more preferably not more than 100 nm, most preferably not more than 70 nm), wherein the two types of layers are alternately stacked.

The photocatalytic member according to the present invention includes a photocatalytic layer of the fine photocatalyst particles described above. The fine photocatalyst particles allow the surface area of the particles to increase, wherein the surface of the particles is in contact with water, and, thus allow a charge recombination reaction at an interface of the particle to be promoted.

The photocatalytic member according to the present invention comprises a photocatalytic layer formed of photocatalyst fine particles, and, thus, the number of contact points between the photocatalyst fine particles and the substrate per unit area of the substrate is very large. Thus, the mechanical strength between the substrate and the particles and between the particles themselves become good, contributing to enhanced adhesive property between the substrate and the photocatalyst particles and binding property between the photocatalyst particles themselves. Further, when the photocatalytic member is mounted within a photocatalytic module for splitting water described later, detachment of the photocatalyst particles from the substrate and segregation of the photocatalyst particles on the substrate can be suppressed. As a result, the photocatalytic member according to the present invention can maintain a stable production of hydrogen for a long period of time. Thus, the photocatalytic member according to the present invention can split water to generate hydrogen and oxygen and can generate water under visible light irradiation with a stability and a high efficiency for a long period of time.

The photocatalytic layer, which is formed of photocatalyst fine particles, of the photocatalytic member according to the present invention has a highly porous structure comprising pores formed by voids among the particles, and allows water to efficiently diffuse from outside of the layer into the layer and hydrogen and oxygen produced by splitting water in the layer to move outside of the layer. Thus, the photocatalytic member according to the present invention can achieve the production of hydrogen and oxygen with a high efficiency by a highly efficient water-splitting reaction. In a preferred embodiment of the present invention, the pore diameter of the photocatalytic layer of the photocatalytic member according to the present invention is preferably 10 nm or more to 200 nm or less, more preferably 20 nm or more to 100 nm or less.

In the present invention, the pore diameter of the photocatalytic layer means the diameter of pores present among the photocatalyst particles contained in the photocatalytic layer. The pore diameter can be determined by measuring pore distribution using nitrogen gas absorption and desorption treatment according to BJH method. Specifically, for example, a gas absorption pore distribution analyzer (manufactured by BEL JAPAN, INC., "BELSORP-mini") can determine an adsorption and desorption isotherm using nitrogen gas to obtain a pore volume distribution curve by plotting Log differential pore volume against the diameter of pore according to BJH method. The diameter of pore at the peak position of the pore volume distribution curve is determined as a pore diameter of the photocatalytic layer.

Substrate

The material of the substrate of the photocatalytic member according to the present invention is not particularly limited as long as the photocatalytic layer can be fixed on the substrate by firing. Examples of the substrate are formed of an inorganic substance that, even when heated at 250°C or above, is not decomposed. More preferably, the substrate is formed of an inorganic substance that, even when heated at 300°C or above, is not decomposed. More specifically, inorganic oxides or metals can be preferably used. Still more specifically, inorganic oxides such as glasses (soda lime glass and borosilicate glass), quartz, aluminum oxide (alumina), and ceramics and metal such as titanium, aluminum, iron, and stainless steel can be preferably used. At least one material selected from the group consisting of glasses, alumina, and quartz can be more preferably used.

Further, any substrate having such a shape that can allow a photocatalytic layer to be fixed on the surface thereof by firing is not particularly limited. Examples of preferred substrates include a flat plate having a smooth surface (for example, a glass substrate and an alumina substrate) or a flat plate having a porous surface (for example, anodized alumina), a porous body (for example, porous ceramics), and a fiber body (for example, glass fibers and carbon fibers). More preferably, highly light-transparent glass fibers can be used. Thus, light transmission into the inside of the layer is possible, and an enlargement in number of light absorption is expected. The forms of the surface of the substrate may be in wave, comb, fiber, or mesh. In the photocatalytic member according to the present invention, the photocatalytic layer is closely fixed onthe substrate described above in such a state that the photocatalytic layer has a large thickness. Accordingly, water can be stably splitted for a long period of time.

Preferably, the substrate has holes that are open pores within the substrate. The diameter of a hole is preferably 0.1 to 30 $\mu$m. Thus, a hydrogen gas produced by a water-splitting reaction on the surface of the photocatalyst particles can be diffused into pores within the photocatalytic layer and then the hydrogen gas can float in water via the holes within the substrate, which are larger than the pores within the photocatalytic layer, the hydrogen gas can be more efficiently generated.

Process for producing photocatalytic member

The process for producing the photocatalytic member according to the present invention is not particularly limited as far as the process includes a step of fixing photocatalyst particles for hydrogen generation and photocatalyst particles for oxygen generation on the substrate. In a preferred embodiment of the present invention, the process for producing the photocatalytic member according to the present invention includes applying to a substrate a slurry obtained by wet dispersion of a composite photocatalyst comprising photocatalyst particles for hydrogen generation and photocatalyst particles for oxygen generation to produce a coated substrate, wherein the photocatalyst particles for hydrogen generation are in contact with the photocatalyst particles for oxygen generation, and drying and firing the coated substrate.

In another preferred embodiment of the present invention, the process for producing the photocatalytic member according to the present invention includes applying to a substrate a slurry obtained by wet dispersion of photocatalyst particles for hydrogen generation and photocatalyst particles for oxygen generation to produce a coated substrate, and drying and firing the coated substrate.

In still another preferred embodiment of the present invention, the process for producing the photocatalytic member according to the present invention includes providing a slurry obtained by wet dispersion of photocatalyst particles for hydrogen generation and a slurry obtained by wet dispersion of photocatalyst particles for oxygen generationindependently, alternately applying (for example, by immersion) the two types of slurries to a substrate to produce a coated substrate, and drying and firing the coated substrate to prepare a photocatalytic layer comprising photocatalyst particles for hydrogen generation and photocatalyst particles for oxygen generation such that the two types of photocatalyst particles are alternately stacked on the substrate (so-called alternate adsorption method).

In the two latter embodiments among the three embodiments above, as a process for dispersing the photocatalyst particles for hydrogen generation and the photocatalyst particles for oxygen generation in a liquid medium, the process for adsorbing a solvent such as water or an organic solvent or a dispersant on surfaces of the photocatalyst particles for hydrogen generation and the photocatalyst particles for oxygen generation can be preferably used. According to this process, the photocatalyst particles for hydrogen generation and the photocatalyst particles for oxygen generation are homogeneously dispersed independently as a form of primary particles and both types of the particles can be stably mixed. Consequently, an aggregation of photocatalyst particles for hydrogen generation and an aggregation of photocatalyst particles for oxygen generation can be prevented. Therefore, the photocatalyst particles for hydrogen generation can be present closely to the photocatalyst particles for oxygen generation. A photocatalytic member can be obtained by applying these types of particles to the substrate and drying the coated substrate for vaporizing the solvent, asuch that the photocatalyst particles for hydrogen generation are in high-densely contact with the photocatalyst particles for oxygen generation.

Preferable method of the wet dispersion method includes ultrasonic irradiation and mechanical dispersion methods such as ball milling and bead milling can be preferably used.

Any solvent is not particularly limited as long as the composite photocatalyst according to the present invention, or the photocatalyst particles for hydrogen generation and the photocatalyst particles for oxygen generation can be dispersed in the solvent. In a preferred embodiment of the present invention, the solvents may include water, organic solvents such as ethanol, and organic vehicle solvents such as $\alpha$-terpineol. Further, dispersants may be added to the solvents for improving the dispersibility in the solvents of the composite photocatalyst according to the present invention, or the photocatalyst particles for hydrogen generation and the photocatalyst particles for oxygen generation in the solvents.

A method for applying to the substrate the slurry obtained by wet dispersion of the composite photocatalyst comprising photocatalyst particles for hydrogen generation and photocatalyst particles for oxygen generation, wherein the photocatalyst particles for hydrogen generation are in contact with the photocatalyst particles for oxygen generation, or the slurry obtained by wet dispersion of photocatalyst particles for hydrogen generation and photocatalyst particles for oxygen generation, may preferably include spin coating, dip coating, spraying, doctor blade coating, electrophoresis, and screen printing. The coating methods may be properly selected depending upon the shape and type of the substrate.

According to the production process described above, the photocatalytic layer of the photocatalytic member according to the present invention can have a thickness of 0.1 to 50 μm. In a preferred embodiment of the present invention, the thickness of the photocatalytic layer can be regulated by the light absorption coefficient of its photocatalytic material. For example, to form a photocatalytic layer having a thickness of not more than 1 μm, spin coating, dip coating, spraying or the like is preferred. To form a photocatalytic layer having a thickness of not less than 1 μm, screen printing, doctor blade coating, electrophoresis or the like is preferred.

Another preferred embodiment of the method for dispersing the photocatalyst particles for hydrogen generation and the photocatalyst particles for oxygen generation in a liquid medium comprises a step of dispersing the photocatalyst particles for hydrogen generation and the photocatalyst particles for oxygen generation independently in solutions containing polymers having different charges (anionic polymer and cationic polymer), then forming primary particles of the photocatalyst particles for hydrogen generation and the photocatalyst particles for oxygen generation to prepare slurries, wherein both types of the particles are nearly monodispersed. Thereafter, these slurries are mixed together, and the photocatalyst particles for hydrogen generation can spontaneously be adsorbed to, can be close to, or can be in contact with the photocatalyst particles for oxygen generation through coulomb interaction between polymers with different charges, wherein the polymers are adsorbed on the surfaces of both types of the particles. For example, the photocatalyst particles for hydrogen generation are dispersed in a solution containing an anionic polymer to prepare a slurry, the photocatalyst particles for oxygen generation are dispersed in an aqueous solution containing a cationic polymer to form a slurry, and these slurries are then mixed to allow both types of the primary particles to be in contact with each other in a highly dense state. Thereafter, firing is carried out in such a state that the primary particles are in a densely high-contact state, thereby removing the polymer to produce a composite photocatalyst having a high activity.

Preferably, the firing temperature in fixing on the substrate the composite photocatalyst according to the present invention, or the photocatalyst particles for hydrogen generation and the photocatalyst particles for oxygen generation is a temperature at or above a heat decomposition temperature of the solvent, the dispersant or the like. In addition the firing temperature is such that sintering between the substrate and the composite photocatalyst particles, sintering between the substrate and the photocatalyst particles for hydrogen generation and the photocatalyst particles for oxygen generation, sintering between the composite photocatalysts, and sinteing between the photocatalyst particles for hydrogen generation and the photocatalyst particles for oxygen generation can be undergone. Specifically, the firing temperature is 300°C or above to 700°C or below, more preferably 400°C or above to 600°C or below. The firing temperature in the above-defined range allows visible light responsive photocatalytic members for splitting water to have high adhesion to the substrate, have high interparticle binding property, and maintain stable condition for a long period of time.

In the production of the photocatalytic member according to the present invention, the mixing ratio of the photocatalyst particles for hydrogen generation to the photocatalyst particles for oxygen generation is preferably photocatalyst particles for hydrogen generation photocatalyst particles for oxygen generation = 10 : 90 to 90 : 10, more preferably 20 : 80 to 80 : 20, in terms of weight ratio. When mixing is carried out in the above-defined mixing ratio range, a charge recombination reaction in the interface of the particles can be promoted. As a result, the water-splitting efficiency of the photocatalytic member according to the present invention can be enhanced.

When a photocatalyst having a high absorption coefficient such as $BiVO_4$ and a photocatalyst having a low absorption coefficient are used, an optimal light absorption property can be obtained even when the mixing ratio of the photocatalyst having a high light absorption coefficient to the photocatalyst having a low absorption coefficient is lowered.

When a photocatalyst having a low absorption coefficient such as rhodium-doped strontium titanate and a photocatalyst having a high absorption coefficient are used, an optimal light absorption property can be obtained by raising the mixing ratio of the photocatalyst having a low absorption coefficient to the photocatalyst having a high absorption coefficient.

Photocatalytic module for splitting water

The photocatalytic module for splitting water according to the present invention comprises the photocatalytic member. In a preferred embodiment of the present invention, the photocatalytic module for splitting water according to the present invention has a nearly transparent light incident surface and is structured such that light is incident on a photocatalytic member disposed within the module. In addition, the photocatalytic module has a sealed panel configuration for containing water so that the photocatalytic member can be always in contact with water. In a more preferred embodiment of the present invention, the photocatalytic module for splitting water according to the present invention further comprises a mechanism such as a water passing hole through which water, the amount of which is reduced with the progress of the water-splitting reaction, is successively added and supplied. The photocatalytic module for splitting water having the above construction allows commercially available production of hydrogen.

Hydrogen production system

The hydrogen production system according to the present invention comprises the photocatalytic module for splitting water. In a preferred embodiment of the present invention, the hydrogen production system according to the present invention comprises a water supply apparatus, a filtration apparatus for removing impurities contained in water to some extent, a photocatalytic module for splitting water, a hydrogen separation apparatus, and a hydrogen storage apparatus. The hydrogen production system having the above construction allows production of hydrogen from sunlight and water as a renewable energy source.

EXAMPLES

The present invention is further illustrated by the following not-limiting examples.

Reparation of photocatalyst (rhodium-doped strontium titanate) particles 1 for hydrogen generation

0.02 mol (2.003 g) of acetyl acetone (manufactured by Wako Pure Chemical Industries, Ltd.) as a hydrophobic complexing agent was added to a 20-mL sample bottle, and 0.02 mol (5.684 g) of titaniumtetraisopropoxide (manufactured by Wako Pure Chemical Industries, Ltd.) was added thereto with stirring at room temperature to prepare a yellow solution containing a water-soluble titanium-acetyl acetone complex. The solution containing the water-soluble titanium-acetyl acetone complex was added to 50 mL of a 0.32 mol/L aqueous acetic acid solution with stirring at room temperature to prepare a mixture. The mixture was stirred at room temperature for about one hr and then at 60°C for about one hr to prepare an aqueous solution containing a yellow transparent water-soluble titanium complex.
A portion (10 g) of the aqueous solution containing the water-soluble titanium complex prepared above was then taken (containing 3.41 mmol of titanium in terms of metallic titanium). A solution of 3.75 mmol (0.84 g) of strontium acetate 0.5 hydrate (manufactured by Wako Pure Chemical Industries, Ltd.) and 0.70 g of lactic acid (manufactured by Wako Pure Chemical Industries, Ltd.) as a hydrophilic complexing agent, dissolved in 3.16 g of distilled water was added to the aqueous complex solution to prepare a mixed aqueous solution, and, further, a 5 wt% aqueous solution of rhodium trichloride (manufactured by Wako Pure Chemical Industries, Ltd.) was added to the mixed aqueous solution so that the concentration in terms of the molar ratio of M (rhodium) to M (titanium + rhodium) was 0.02 (% by mole), followed by stirring at room temperature for 3 hr. Thus, the mixed aqueous solution containing a precursor of an orange-colored transparent rhodium-doped strontium titanate was obtained. The mixed aqueous solution had a pH value of about 4.
Further, an acryl-styrene-based O/W emulsion (manufactured by DIC, "EC-905EF," dispersed particle diameter 100 to 150 nm, pH: 7 to 9, solid content 49 to 51%) was added as water-dispersible organic polymer particles to the mixed aqueous solution so that the solid amount of acryl-styrene-based O/W emulsion was five times than that of rhodium-doped strontium titanate obtained after firing in terms of weight ratio, thereby preparing a dispersion.
The dispersion thus prepared was dried at 80°C for one hr, and the dried product was fired at 1000°C for 10 hr for high-temperature crystallization to prepare a powder of rhodium-doped strontium titanate particles.
The rhodium-doped strontium titanate thus prepared was analyzed by X-ray diffractometry. As a result, the rhodium-doped strontium titanate was confirmed to have a single-phase perovskite structure. The primary particle diameter of the rhodium-doped strontium titanate was calculated through scanning electron microscopic observation. Specifically, the primary particle diameter was determined by averaging the diameter of the 50 crystal particles in observation, each of which was approximated by a circle, at a magnification of 40,000 times under a scanning electron microscope (manufactured by Hitachi, Ltd., "S-4100"). As a result, the primary particle diameter was not more than 50 nm, and that the fine particle shape was maintained even after high-temperature crystallization treatment. Fig. 2 shows a scanning electron microscopic image of rhodium-doped strontium titanate particles 1.

Preparation of photocatalyst (rhodium-doped strontium titanate) particles 2 for hydrogen generation

Rhodium-doped strontium titanate was prepared by a solid-phase reaction method. Specifically, powders of strontium carbonate (manufactured by Kanto Chemical Co., Inc.), titanium oxide (manufactured by Soekawa Rikagaku, Ltd., rutile-type), and rhodium oxide ($Rh_2O_3$: manufactured by Wako Pure Chemical Industries, Ltd.) were mixed together at a molar ratio of Sr : Ti : Rh is 1.07 : 0.98 : 0.02, and the mixture was fired at 1000°C for 10 hr.
Coarse particles of the rhodium-doped strontium titanate thus prepared were analyzed by X-ray diffractometry and, as a result, the coarse particles of the rhodium-doped strontium titanate had a single-phase perovskite structure. The primary particle diameter of the rhodium-doped strontium titanate was calculated through scanning electron microscopic observation. As a result, the primary particle diameter was about 500 nm.

Preparation of photocatalyst (chromium- and tantalum-doped strontium titanate) particles 3 for hydrogen generation

0.02 mol (2.003 g) of acetyl acetone (manufactured by Wako Pure Chemical Industries, Ltd.) as a hydrophobic complexing agent was added to a 20-mL sample bottle, and 0.02 mol (5.684 g) of titaniumtetraisopropoxide (manufactured by Wako Pure Chemical Industries, Ltd.) was added thereto with stirring at room temperature to prepare a yellow solution containing a water-soluble titanium-acetyl acetone complex. The solution containing the water-soluble titanium-acetyl acetone complex was added to 50 mL of a 0.32 mol/L aqueous acetic acid solution with stirring at room temperature to prepare a mixture. After the addition, the mixture was stirred at room temperature for about one hr and then at 60°C for about one hr to prepare an aqueous solution containing a yellow transparent water-soluble titanium complex.

A portion (9.4 g) of the aqueous solution containing the water-soluble titanium complex prepared above was then taken (containing 3.21 mmol of titanium in terms of metallic titanium). A solution of 3.75 mmol (0.84 g) of strontium acetate 0.5 hydrate (manufactured by Wako Pure Chemical Industries, Ltd.) and 0.70 g of lactic acid (manufactured by Wako Pure Chemical Industries, Ltd.) as a hydrophilic complexing agent, dissolved in 3.16 g of distilled water was added to the aqueous complex solution to prepare a mixed aqueous solution. Further, an aqueous tantalum solution and a 5 wt% aqueous solution of chromium(III) nitrate hexahydrate (manufactured by Wako Pure Chemical Industries, Ltd.) were added to the mixed aqueous solution so that the molar amount of each of tantalum and chromium was 0.096 mmol, followed by stirring at room temperature for 3 hr. Thus, an orange-colored transparent aqueous solution containing a chromium- and tantalum-doped strontium titanate precursor was obtained. The aqueous solution had a pH value of about 4. Here the aqueous tantalum solution used was one prepared as follows. 0.02 mol (2.003 g) of acetyl acetone (manufactured by Wako Pure Chemical Industries, Ltd.) and 0.02 mol (8.125 g) of tantalumpentaethoxide (manufactured by Wako Pure Chemical Industries, Ltd.) were mixed together to prepare a tantalumacetyl acetone complex solution. The tantalumacetyl acetone complex solution was added to 50 mL of 0.32 mol/L aqueous acetic acid solution to which 0.1 mol of citric acid (manufactured by Wako Pure Chemical Industries, Ltd.) was added at room temperature with stirring to prepare a mixture. Thereafter, the mixture was stirred at room temperature for one hr to prepare an aqueous tantalum solution.

Further, an acryl-styrene-based O/W emulsion (manufactured by DIC, "EC-905EF," dispersed particle diameter 100 to 150 nm, pH: 7 to 9, solid content 49 to 51%) as water-dispersible organic polymer particles was added to the aqueous solution so that the solid amount of acryl-styrene-based O/W emulsion was five times than that of chromium- and tantalum-doped strontium titanate obtained after firing in terms of weight ratio, thereby preparing a dispersion.

The dispersion thus prepared was dried at 80°C for one hr, and the dried product was fired at 1000°C for 10 hr for high-temperature crystallization to prepare a powder of chromium- and tantalum-doped strontium titanate particles.

The chromium- and tantalum-doped strontium titanate particles thus prepared were analyzed by X-ray diffractometry. As a result, the chromium- and tantalum-doped strontium titanate was confirmed to have a single-phase perovskite structure. The primary particle diameter of the chromium- and tantalum-doped strontium titanate was calculated through scanning electron microscopic observation. As a result, the primary particle diameter was about 50 nm.

Preparation of photocatalyst (bismuth vanadate) particles 1 for oxygen generation

10 g of water and 0.0017 mol (0.2536 g) of L-(+)tartaric acid (manufactured by Wako Pure Chemical Industries, Ltd.) as a complexing agent were mixed in a 20-mL sample bottle, and 0.0017 mol (0.20 g) of ammonium metavanadate (manufactured by Aldrich) was further mixed in the bottle with stirring at room temperature to prepare a mixture. The mixture was stirred at 50°C for one hr to prepare a reddish brown-colored transparent aqueous solution containing a water-soluble vanadium complex. 10 g of water and 0.017 mol (0.494 g) of ethylenediamine tetraacetate (manufactured by Wako Pure Chemical Industries, Ltd.) as a complexing agent were mixed in a 20-mL sample bottle, and 1 g of 25% ammonia water was further added dropwise and dissolved in 10g of water, and subsequently 0.0017 mol (0.82 g) of bismuth nitrate pentahydrate (manufactured by Wako Pure Chemical Industries, Ltd.) was added with stirring at room temperature to prepare a mixture. The mixture was stirred for one hr to prepare a colorless transparent aqueous solution containing a water-soluble bismuth complex.

Next, the aqueous solution containing the water-soluble vanadium complex was added to the aqueous solution containing the water-soluble bismuth complex, and the mixture was stirred at room temperature for 3 hr. Thus, a blue-colored transparent aqueous solution containing a $BiVO_4$ precursor that is a metal-containing precursor was obtained. The aqueous solution had a pH value of about 8.

The aqueous $BiVO_4$ precursor solution thus prepared was dried at 80°C for one hr, and the dried product was fired at 500°C for 2 hr to prepare a powder of $BiVO_4$ particles.

The $BiVO_4$ particles thus prepared was analyzed by X-ray diffractometry. As a result, the $BiVO_4$ particles were confirmed to have a monoclinic celite structure of a single-phase. The primary particle diameter of the $BiVO_4$ particles was calculated through scanning electron microscopic observation. As a result, the primary particle diameter was about 70 nm.

Preparation of photocatalyst (bismuth vanadate) particles 2 for oxygen generation

50 g of 0.5 M nitric acid aqueous solution was mixed in a 100-mL sample bottle,and 0.0016 mol (0.75 g) of bismuth nitrate pentahydrate (manufactured by Wako Pure Chemical Industries, Ltd.) and 0.0016 mol (0.14 g) of ammonium metavanadate (manufactured by Aldrich) were further mixed in the bottle, and the mixture thereof was stirred with a magnetic stirrer at 25°C for 2 days to prepare a yellow suspension. The yellow suspension was centrifuged to collect solid component that was then dried at 45°C for 3 hr to prepare a powder of $BiVO_4$ particles.

The $BiVO_4$ particles thus prepared were analyzed by X-ray diffractometry. As a result, the $BiVO_4$ particles were confirmed to have a monoclinic celite structure of a single-phase. The primary particle diameter of the $BiVO_4$ particles was determined through scanning electron microscopic observation. As a result, the primary particle diameter was about 200 nm.

Preparation of photocatalyst (bismuth vanadate particles 3 for oxygen generation

A powders of $BiVO_4$ particles was prepared by a solid-phase reaction method. Specifically, powders of bismuth oxide (manufactured by Wako Pure Chemical Industries, Ltd.) and vanadium pentoxide (manufactured by Wako Pure Chemical Industries, Ltd.) were mixed together at a molar ratio of Bi : V is 1 : 1, and the mixture was fired at 700°C for 8 hr to prepare a powder of $BiVO_4$ particles.

The $BiVO_4$ particles thus prepared was analyzed by X-ray diffractometry. As a result, the $BiVO_4$ particles were confirmed to have a monoclinic celite structure of a single-phase. The primary particle diameter of the $BiVO_4$ particles was determined through scanning electron microscopic observation. As a result, the primary particle diameter was about 2000 nm.

Provision of photocatalyst (tungsten oxide) particles 4 for oxygen generation

Tungsten oxide ($WO_3$) (manufactured by Wako Pure Chemical Industries, Ltd.) was provided. The tungsten oxide was analyzed by X-ray diffractometry. As a result, the tungsten oxide was confirmed to have a monoclinic celite structure of a single-phase. The primary particle diameter of the tungsten oxide was determined through scanning electron microscopic observation. As a result, the primary particle diameter was about 200 nm.

Supporting of ruthenium co-catalyst on doped strontium titanate by photoreduction method

0.1 g of each of the rhodium-doped strontium titanate and the chromium- and tantalum-doped strontium titanate as the photocatalyst particles for hydrogen generation prepared as above, 0.2 g of an aqueous solution containing 1% by weight of ruthenium chloride n hydrate (manufactured by Wako Pure Chemical Industries, Ltd.) as a co-catalyst material, and 200 mL of ultrapure water containing 10% by volume of methanol as an oxidative sacrificial reagent were mixed in a glass flask with a Pyrex (registered trademark) window to prepare a mixture. Visible light by a 300-W xenon lamp (manufactured by Cermax, PE-300BF) equipped with a UV cutoff filter (L-42, manufactured by HOYA) was applied to the mixture under an argon atmosphere for 3 hr through a Pyrex (registered trademark) window while stirring with a stirrer to reduce ruthenium chloride on the surface of photocatalyst particles for hydrogen generation, thereby preparing the each type of photocatalyst particles for hydrogen generation with 1% by weight of ruthenium fine particles supported on the surface thereof. The photocatalyst particles for hydrogen generation with ruthenium supported thereon were fired at 200°C for 2 hr under a hydrogen gas stream to completely reduce ruthenium.

Preparation of composite photocatalyst including photocatalyst particles for hydrogen generation being in contact with photocatalyst particles for oxygen generation

Examples 1 to 7 and Comparative Example 1

Rhodium-doped strontium titanate particles (particles 1 and 2) with 1% by weight of ruthenium supported thereon or chromium- and tantalum-doped strontium titanate particles (particles 3) with 1% by weight of ruthenium supported thereon and bismuth vanadate particles (particles 1 to 3) or tungsten oxide particles (particles 4) were suspended in 0.5 g of distilled water in combinations and in weight amounts shown in Table 1, and the suspension was subjected to a ultrasonic irradiation treatment for 5 mins to prepare a slurry with the particles dispersed in a wet state in the form of substantially primary particles. Thereafter, water as the solvent was gradually evaporated while manually kneading the slurry in a mortar to prepare composite photocatalyst particles including photocatalyst particles for hydrogen generation being in contact with photocatalyst particles for oxygen generation. Thereafter, the composite photocatalyst particles were fired at temperatures shown in Table 1 to prepare composite photocatalysts of Examples 1 to 7 and Comparative

Example 1.

<u>Water-splitting activity of composite photocatalyst including photocatalyst particles for hydrogen generation and photocatalyst particles for oxygen generation, wherein the Photocatalyst particles for hydrogen generation are in contact with the Photocatalyst particles for oxygen generation</u>

0.05 g of the composite photocatalysts and 200 ml of ultrapure water were mixed in a glass flask with a Pyrex (registered trademark) window to prepare a reaction solution. The glass flask containing the reaction solution was mounted on a closed circulation device, and the reaction system was purged with argon. Visible light by a 300-W xenon lamp (manufactured by Cermax, PE-300BF) equipped with a UV cutoff filter (L-42, manufactured by HOYA) was applied to the mixture under an argon atmosphere for 3 hr through a Pyrex (registered trademark) window. The amount of hydrogen generated as a result of reduction of water by a photocatalytic reaction was measured for 3 hr after the start of the irradiation by a gas chromatograph (manufactured by Shimadzu Seisakusho Ltd., GC-8A, TCD detector, MS-5A column). The results were shown in Table 1.

[Table 1]

| | Photocatalyst particles for hydrogen generation | | | | Photocatalyst particles for oxygen generation | | | | Firing temp. | Amount of hydrogen generated during 3-hr light irradiation |
|---|---|---|---|---|---|---|---|---|---|---|
| | Particle | Material | Diameter of primary particles | Amount | Particle | Material | Diameter of primary particles | Amount | | |
| Example 1 | 1 | Rh-STO | 50 nm | 0.025 g | 1 | $BiVO_4$ | 70 nm | 0.025 g | 300°C | 6.7 $\mu$mol |
| Example 2 | 1 | Rh-STO | 50 nm | 0.050 g | 1 | $BiVO_4$ | 70 nm | 0.025 g | 300°C | 10.13 $\mu$mol |
| Example 3 | 1 | Rh-STO | 50 nm | 0.025 g | 1 | $BiVO_4$ | 70 nm | 0.050 g | 300°C | 6.7 $\mu$mol |
| Example 4 | 1 | Rh-STO | 50 nm | 0.025 g | 1 | $BiVO_4$ | 70 nm | 0.025 g | 400°C | 3.57 $\mu$mol |
| Example 5 | 1 | Rh-STO | 50 nm | 0.025 g | 2 | $BiVO_4$ | 200 nm | 0.025 g | 300°C | 3.19 $\mu$mol |
| Example 6 | 3 | Cr,Ta-STO | 50 nm | 0.025 g | 1 | $BiVO_4$ | 70 nm | 0.025 g | 300°C | 0.02 $\mu$mol |
| Example 7 | 1 | Rh-STO | 50 nm | 0.025 g | 4 | $WO_3$ | 200 nm | 0.025 g | 300°C | 3.76 $\mu$mol |
| Comparative Example 1 | 2 | Rh-STO | 500 nm | 0.025 g | 3 | $BiVO_4$ | 2000 nm | 0.025 g | 300°C | 0.51 $\mu$mol |

Preparation of photocatalytic member including photocatalyst particles for hydrogen generation and photocatalyst particles for oxygen generation

Examples 1 to 5 and Comparative Examples 1 and 2

α-Terpineol (manufactured by Kanto Chemical Co., Inc.), 2-(2-butoxyethoxy) ethanol (manufactured by Wako Pure Chemical Industries, Ltd.), and polyvinyl butyral (manufactured by Tokyo Chemical Industry Co., Ltd., molecular weight 600) were mixed at a ratio of 65 : 15 : 20 (weight ratio), and the mixture was heated in a hermetically-sealed glass container at 60°C for 15 hr to prepare an organic vehicle solution. 0.4 g of the organic vehicle solution and 0.2 g of α-terpineol were manually in a mortar mixed with 0.1 g of rhodium-doped strontium titanate particles (particles 1) with 1% by weight of ruthenium supported thereon as photocatalyst particles for hydrogen generation and 0.1 g of bismuth vanadate particles (particles 1 to 3) or 0.1 g of tungsten oxide particles (particles 4) as photocatalyst particles for oxygen generation in combinations shown in Table 2 for 3 hr to prepare a paste for screen printing containing a composite photocatalyst. The paste for screen printing was applied by screen printing to an opening of 4 cm × 4 cm provided on a borosilicate glass substrate (5 cm × 5 cm × 1 mm in thickness) with a coating thickness shown in Table 2. Thereafter, the coating was dried at 60°C for one hr and was then fired at 450°C for 30 mins to prepare visible light responsive photocatalytic members for splitting water of Examples 1 to 5 and Comparative Examples 1 and 2.

Example 6

A mixture of 0.1 g of the paste for screen printing prepared in Example 3 with 0.9 g of ethanol was suction-filtered while dropping the mixture on a circular quartz glass fiber filter (manufactured by Whatman) having a diameter of 47 mm to adsorb the composite catalyst on the filter. Thereafter, the adsorbed composite catalyst was fired at 350°C for 30 mins to prepare a photocatalytic member with the composite photocatalyst supported on the glass fiber filter.

Example 7

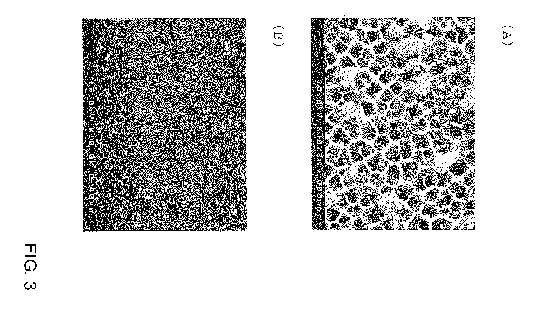

A mixture of 0.1 g of the paste for screen printing prepared in Example 3 with 0.9 g of ethanol was suction-filtered while dropping the mixture on an anodized alumina filter (manufactured by Whatman) having a diameter of 47 mm to adsorb the composite catalyst on the filter. Thereafter, the adsorbed composite catalyst was fired at 350°C for 30 mins to prepare a photocatalytic member with the composite photocatalyst supported on the anodized alumina filter. An image of the photocatalytic member obtained by scanning electron microscopic observation is shown in Fig. 3, wherein (A) is an image of a surface of the photocatalytic member and (B) is an image of a cross section of the photocatalytic member obtained by the observation.

Measurement of thickness of photocatalytic layer obtained by scanning electron microscopic observation

The thickness of the photocatalytic layer was measured from the image obtained by the scanning electron microscopic observation of the cross section of the photocatalytic member. The thickness of the photocatalytic layer of Examples 1 to 5 was measured at a magnification of 2,000 times. The thickness of the photocatalytic layer of Examples 6 and 7 was measured at a magnification of 10,000 times. The height from the surface of the substrate to the uppermost portion of the photocatalytic layer was measured as the thickness of the photocatalytic layer. The results were shown in Table 2.

Measurement of mean pore diameter

The mean pore diameter in the photocatalytic layer of each of the photocatalytic members was measured by a nitrogen absorption and desorption method according to the following procedures. At the outset, the paste for screen printing prepared as above was applied by screen printing to a borosilicate glass substrate with a coating thickness of 120 μm and a coating area of 8 cm × 8 cm. The coating was dried at 60°C for one hr and was then fired at 450°C for 30 min to prepare a visible light responsive photocatalytic member for splitting water. This visible light responsive photocatalytic member for splitting water was made for the measurement of the mean pore diameter thereof. The photocatalytic layer of the photocatalytic member obtained after firing was separated from the borosilicate glass substrate using a resin squeegee, and the photocatalytic layer was collected as a powder. For 0.1 g of the powder, a nitrogen adsorption and desorption isotherm using nitrogen gas was determined with a nitrogen absorption and desorption analyzer (manufactured by BEL JAPAN, INC., "BELSORP-mini") to obtain a pore volume distribution curve by plotting Log differential pore volume against the diameter of pore according to BJH method. The diameter of pore at the peak position of the pore volume distribution curve was determined as the mean pore diameter of each photocatalytic layer. The results were shown in Table 2.

Adhesion test

The adhesion between the substrate and the photocatalytic layer was evaluated by a tape separation test in which a mending tape (manufactured by Sumitomo 3M Ltd., thickness 63 $\mu$m)was attached to the photocatalytic layer provided on the substrate and the tape was then separated. The evaluation was specifically conducted as follows. The mending tape was attached to the photocatalytic layer, and a finger was slid across the tape in 5 reciprocating cycles. After 10 secs, the tape was separated at once. The criteria of the evaluation were as follows. The results were shown in Table 2.
good: After the separation of the tape, the photocatalytic layer stayed on the substrate.
No good: After the separation of the tape, the photocatalytic layer was completely separated from the substrate.

Water-splitting activity of photocatalytic member including photocatalyst particles for hydrogen generation and photocatalyst particles for oxygen generation

The photocatalytic member was introduced into a separable glass flask with a Pyrex (registered trademark) window, and was mixed with 200 ml of ultrapure water to prepare a reaction solution. The glass flask containing the reaction solution was mounted on a closed circulation device. The reaction system was purged with argon. Visible light by a 300-W xenon lamp (manufactured by Cermax, PE-300BF) equipped with a UV cutoff filter (L-42, manufactured by HOYA) was applied to the mixture through a Pyrex (registered trademark) window. The amount of hydrogen generated as a result of reduction of water by a photocatalytic reaction was measured for 3 hr after the start of the irradiation by using a gas chromatograph (manufactured by Shimadzu Seisakusho Ltd., GC-8A, TCD detector, MS-5A column). The results were shown in Table 2.

[Table 2]

| | Photocatalyst particles for hydrogen generation | | | | Photocatalyst particles for oxygen generation | | | | Coating thickness | Thickness | Mean pore diameter | Amount of hydrogen generated during 3-hr light irradiation | Adhesion test |
|---|---|---|---|---|---|---|---|---|---|---|---|---|---|
| | Particle | Material | Diameter of primary particles | Amount | Particle | Material | Diameter of primary particles | Amount | | | | | |
| Example 1 | 1 | Rh-STO | 50 nm | 0.1 g | 1 | $BiVO_4$ | 70 nm | 0.1 g | 120 μm | 10 μm | 70 nm | 1.66 μmol | ○ |
| Example 2 | 1 | Rh-STO | 50 nm | 0.1 g | 1 | $BiVO_4$ | 70 nm | 0.1 g | 60 μm | 5 μm | 70 nm | 1.37 μmol | ○ |
| Examples 3 | 1 | Rh-STO | 50 nm | 0.1 g | 1 | $BiVO_4$ | 70 nm | 0.1 g | 20 μm | 1 μm | 70 nm | 0.8 μmol | ○ |
| Example 4 | 1 | Rh-STO | 50 nm | 0.1 g | 2 | $BiVO_4$ | 200 nm | 0.1 g | 120 μm | 10 μm | 90 nm | 1.64 μmol | ○ |
| Example 5 | 1 | Rh-STO | 50 nm | 0.1 g | 4 | $WO_3$ | 200 nm | 0.1 g | 20 μm | 1 μm | 90 nm | 2.35 μmol | ○ |
| Example 6 | 1 | Rh-STO | 50 nm | 0.1 g | 1 | $BiVO_4$ | 70 nm | 0.1 g | 20 μm | 0.2 μm | 70 nm | 0.06 μmol | ○ |
| Example 7 | 1 | Rh-STO | 50 nm | 0.1 g | 1 | $BiVO_4$ | 70 nm | 0.1 g | 20 μm | 1 μm | 70 nm | 0.15 μmol | ○ |
| Comparative Examples 1 | 2 | Rh-STO | 500 nm | 0.1 g | 3 | $BiVO_4$ | 2000 nm | 0.1 g | 120 μm | 10 μm | 530 nm | 0.1 μmol | × |
| Comparative Example 2 | 2 | Rh-STO | 500 nm | 0.1 g | 3 | $BiVO_4$ | 2000 nm | 0.1 g | 20 μm | 1 μm | 530 nm | 0.02 μmol | × |

[DESCRIPTION OF REFERENCE CHARACTERS]

1: photocatalyst particles for hydrogen generation
2: photocatalyst particles for oxygen generation
3: void among particles
4: substrate
5: thickness

## Claims

1. A composite photocatalyst comprising visible light responsive photocatalyst particles for hydrogen generation having a primary particle diameter of not more than 100 nm and visible light responsive photocatalyst particles for oxygen generation, the visible light responsive photocatalyst particles for hydrogen generation being in contact with the visible light responsive photocatalyst particles for oxygen generation.

2. The composite photocatalyst according to claim 1, wherein cocatalysts for hydrogen generation are supported on a surface of the visible light responsive photocatalyst particles for hydrogen generation.

3. The composite photocatalyst according to claim 1 or 2, wherein the visible light responsive photocatalyst particles for oxygen generation have a primary particle diameter of not more than 500 nm.

4. The composite photocatalyst according to any one of claims 1 to 3, wherein the visible light responsive photocatalyst particles for hydrogen generation have a primary particle diameter of not more than 70 nm.

5. The composite photocatalyst according to any one of claims 1 to 4, wherein the visible light responsive photocatalyst particles for hydrogen generation are rhodium-doped strontium titanate particles.

6. The composite photocatalyst according to claim 5, wherein the rhodium-doped strontium titanate particles have an absorbance at a wavelength of 570 nm of not less than 0.6 and an absorbance at a wavelength of 1800 nm of not more than 0.7, each absorbance being determined by measuring a diffuse reflection spectrum.

7. The composite photocatalyst according to claim 5 or 6, wherein the rhodium-doped strontium titanate particles have a molar ratio represented by M (rhodium)/M (titanium + rhodium) of 0.001 to 0.03.

8. The composite photocatalyst according to any one of claims 5 to 7, wherein the rhodium-doped strontium titanate is produced by providing a solution of a titanium compound, a strontium compound, and a hydrophobic complexing agent dissolved in water; drying the solution to obtain a residue, and firing the residue.

9. The composite photocatalyst according to any one of claims 1 to 8, wherein the visible light responsive photocatalyst particles for oxygen generation are one or more compounds selected from the group consisting of $WO_3$, $BiVO_4$, $Fe_2O_3$, $Bi_2WO_6$, TaON, $Ta_3N_5$, $BaTaO_2N$, and $LaTiO_2N$.

10. The composite photocatalyst according to any one of claims 1 to 8, wherein the visible light responsive photocatalyst particles for oxygen generation are one or more compounds selected from the group consisting of $WO_3$, $BiVO_4$, and $Fe_2O_3$.

11. The composite photocatalyst according to any one of claims 1 to 10, wherein the composite photocatalyst is used for splitting water with visible light.

12. A photocatalytic member comprising: a substrate; and a photocatalytic layer fixed on the substrate, wherein the photocatalytic layer comprises visible light responsive photocatalyst particles for hydrogen generation having a primary particle diameter of not more than 100 nm and visible light responsive photocatalyst particles for oxygen generation, the visible light responsive photocatalyst particles for hydrogen generation being in contact with the visible light responsive photocatalyst particles for oxygen generation.

13. The photocatalytic member according to claim 12, wherein the photocatalytic layer has pores, the pores having a diameter of 20 nm (inclusive) to 100 nm (inclusive).

14. The photocatalytic member according to claim 12 or 13, wherein the substrate is formed of an inorganic substance that, when heated at 250°C or above, is not decomposed.

15. The photocatalytic member according to any one of claims 12 to 14, wherein the photocatalytic member is used for splitting water with visible light.

16. A photocatalytic module for splitting water, the photocatalytic module comprising the photocatalytic member according to claim 15.

17. A hydrogen production system comprising the photocatalytic module for splitting water according to claim 16.

FIG. 1

FIG. 2

(A)

(B)

FIG. 3

# EP 2 898 951 A1

| INTERNATIONAL SEARCH REPORT | International application No. |
|---|---|
| | PCT/JP2013/076450 |

**A. CLASSIFICATION OF SUBJECT MATTER**
*B01J35/02(2006.01)i, B01J23/648(2006.01)i, B01J37/08(2006.01)i, C01B3/04 (2006.01)i, C01B13/02(2006.01)i*

According to International Patent Classification (IPC) or to both national classification and IPC

**B. FIELDS SEARCHED**

Minimum documentation searched (classification system followed by classification symbols)
B01J35/02, B01J23/648, B01J37/08, C01B3/04, C01B13/02

Documentation searched other than minimum documentation to the extent that such documents are included in the fields searched
Jitsuyo Shinan Koho        1922–1996   Jitsuyo Shinan Toroku Koho   1996–2013
Kokai Jitsuyo Shinan Koho  1971–2013   Toroku Jitsuyo Shinan Koho   1994–2013

Electronic data base consulted during the international search (name of data base and, where practicable, search terms used)
JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| A | WO 2011/148683 A1 (University of Yamanashi), 01 December 2011 (01.12.2011), claims; Mode for Carrying out the Invention; drawings (Family: none) | 1–17 |
| A | JP 2011-173102 A (Mitsubishi Chemical Corp.), 08 September 2011 (08.09.2011), claims; Mode for Carrying out the Invention; examples; drawings (Family: none) | 1–17 |
| A | JP 2005-199187 A (Tokyo University of Science), 28 July 2005 (28.07.2005), claims; Best Mode for carrying out the Invention; drawings (Family: none) | 1–17 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 29 November, 2013 (29.11.13) | 10 December, 2013 (10.12.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

30

**INTERNATIONAL SEARCH REPORT**

| International application No. |
| --- |
| PCT/JP2013/076450 |

C (Continuation).   DOCUMENTS CONSIDERED TO BE RELEVANT

| Category* | Citation of document, with indication, where appropriate, of the relevant passages | Relevant to claim No. |
| --- | --- | --- |
| P,A | JP 2012-188683 A  (Mitsui Chemicals, Inc.), 04 October 2012 (04.10.2012), claims; examples 8 to 10 (Family: none) | 1-17 |
| P,A | JP 2013-180245 A  (Toyota Motor Corp.), 12 September 2013 (12.09.2013), claims; Mode for Carrying out the Invention; examples; drawings (Family: none) | 1-17 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012187520 A

- JP 2012056947 A

**Non-patent literature cited in the description**

- **SASAKI et al.** *J. Phys. Chem. C,* 2009, 17536-17542

- **CRONEMEYER et al.** *Phys. Rev.,* 1959, vol. 113, 1222-1225